# EUROPEAN PATENT APPLICATION

(11) **EP 4 645 017 A1**
(43) Date of publication of application: **05.11.2025**
(21) Application number: 25168611.9
(22) Date of filing: 04.04.2025
(51) Int. Cl.: G05D 1/20

(54) **APPARATUSES, COMPUTER-IMPLEMENTED METHODS, AND COMPUTER PROGRAM PRODUCTS FOR CONTROLLING VEHICLE NAVIGATION**

(30) Priority: 29.04.2024 IN 202411033945; 11.06.2024 US 202418739951
(71) Applicant: Honeywell International Inc., Charlotte, NC 28202 (US)
(72) Inventor: KOTEKAR, Ravish Udupa, Charlotte, 28202 (US); SUREKHA, Nancy, Charlotte, 28202 (US); P, Nithin Kumar, Charlotte, 28202 (US); HEBBAR, Sudhir, Charlotte, 28202 (US); KUMAR, Amit, Charlotte, 28202 (US)
(74) Representative: Haseltine Lake Kempner LLP

(57) **Abstract**

Embodiments of the disclosure provide for identification of zones for transitioning a vehicle from a beyond visual line of sight (BVLOS) mode to a visual observer mode. Some embodiments receive a travel pathway for a vehicle and generate signal strength indications for the travel pathway based on the travel pathway and satellite-based positioning data from a remote computing environment. Some embodiments generate, based on the signal strength indications, a particular zone along the travel pathway associated with poor signal strength. Some embodiments generate, based on the signal strength indications and particular zone, a visual observer indication that indicates a position along the travel pathway at which a transition of the vehicle from a BVLOS mode to a visual observer mode is initiated. Some embodiments modify the travel pathway based on the visual observer indication and provide the modified travel pathway to a zone-remote control system that controls the vehicle.

## Description

### CROSS REFERENCE TO RELATED APPLICATIONS

This application claims the benefit of and priority to India Application No. 202411033945, filed April 29, 2024, entitled "APPARATUSES, COMPUTER-IMPLEMENTED METHODS, AND COMPUTER PROGRAM PRODUCTS FOR CONTROLLING VEHICLE NAVIGATION," the disclosure of which is incorporated herein by reference in its entirety.

### TECHNOLOGICAL FIELD

Embodiments of the present disclosure are generally directed to controlling navigation of vehicles based at least in part on varying strength of position signals.

### BACKGROUND

Remote piloting of vehicles beyond visual line of sight presents challenges to ensuring air and ground safety. For example, typical approaches to BVLOS navigation of unmanned aerial vehicles (UAV) strongly rely on satellite-based position signals to track and direct the vehicle. Various factors may severely impact the strength and reliability of satellite-based position signals, thereby posing challenges to safe and accurate navigation of the vehicle by a remote operator. For example, buildings, terrain, and large objects may mask or reflect global positioning system (GPS) satellite signals during low altitude missions. GPS signal reflectance may produce timing delays with potential to cause GPS position loss or degradation. For example, a GPS receiver onboard a UAV may inaccurately compute the vehicle's position due to the timing delay of reflected GPS signals, potentially causing the UAV to deviate from its intended travel path.

Applicant has discovered various technical problems associated with BVLOS navigation of vehicles in poor position signal strength conditions. Through applied effort, ingenuity, and innovation, Applicant has solved many of these identified problems by developing the embodiments of the present disclosure, which are described in detail below.

### BRIEF SUMMARY

In general, embodiments of the present disclosure herein provide for position signal strength-based control of vehicle navigation. For example, embodiments of the present disclosure provide for modification of vehicle travel pathways based at least in part on varying strengths of position signal to indicate a position along a travel pathway at which a transition of the vehicle from a beyond visual line of sight (BVLOS) mode for vehicle control to a visual observer mode is initiated. Other implementations for controlling vehicle navigation based at least in part on strength of position signals will be, or will become, apparent to one with skill in the art upon examination of the following figures and detailed description. It is intended that all such additional implementations be included within this description be within the scope of the disclosure, and be protected by the following claims.

In accordance with a first aspect of the disclosure, a computer-implemented method for controlling vehicle navigation based at least in part on strength of position signals is provided. The computer-implemented method is executable utilizing any of a myriad of computing device(s) and/or combinations of hardware, software, firmware. In some example embodiments an example computer-implemented method includes

In accordance with another aspect of the present disclosure, a computing apparatus for controlling vehicle navigation based at least in part on strength of position signals is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein.

In accordance with another aspect of the present disclosure, a computer program product for controlling vehicle navigation based at least in part on strength of position signals is provided. The computer program product in some embodiments includes at least one non-transitory computer-readable storage medium having computer program code stored thereon. The computer program code in execution with at least one processor is configured for performing any one of the example computer-implemented methods described herein.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 illustrates a block diagram of a networked environment that may be specially configured within which embodiments of the present disclosure may operate.
FIG. 2 illustrates a block diagram of an example apparatus that may be specially configured in accordance with at least some example embodiments of the present disclosure.
FIG. 3 illustrates an example data architecture in accordance with at least some example embodiments of the present disclosure.
FIG. 4 illustrates a diagram of example workflow for controlling vehicle navigation based at least in part on strength of position signals in accordance with at least some example embodiments of the present disclosure.
FIG. 5 illustrates a diagram of a vehicle environment in which vehicle navigation may be controlled based at least in part on strength of position signals.
FIG. 6 illustrates a functional band diagram depicting operations of an example workflow for controlling vehicle navigation based at least in part on strength of position signals in accordance with at least some example embodiments of the present disclosure.
FIG. 7 illustrates a flowchart depicting operations of an example process for controlling vehicle navigation based at least in part on strength of position signals in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### Overview

Embodiments of the present disclosure provide a myriad of technical advantages in the technical field of unmanned vehicle navigation. Tracking and navigating an unmanned vehicle along a travel pathway may rely upon a beyond visual line of sight (BVLOS) mode of operation in which the vehicle receives position signals from satellites and a remote pilot navigates the vehicle based at least in part on the satellite-sourced position signals. Such approaches may suffer from any of a myriad of problems, however, such as vehicle misdirection in instances where the vehicle moves into an area where satellite-sourced position signals are weak or unavailable. In some contexts, navigation of an unmanned aerial vehicle (UAV) may rely heavily on global positioning system (GPS) signals received by the UAV. The strength of GPS signals may be adversely impacted by topographical features and infrastructure that produce GPS masking and/or multipath effects. Additionally, GPS signals within a particular region may be unavailable due to lack of adequate satellite coverage or interference from atmospheric conditions. In such instances, the degradation and/or or unavailability of GPS signals may result in positioning errors that cause the UAV to deviate from an intended travel pathway, thereby reducing flight performance and potentially introducing safety hazards.

Embodiments of the present disclosure overcome the technical challenges of position signal-based vehicle navigation at least in part by generating an indication for a position along a travel pathway at which to transition a vehicle from the BVLOS mode to a visual observer mode and modifying the travel pathway based at least in part on the indication to improve the accuracy, precision, and safety of remotely navigating a vehicle along the travel pathway. In the visual observer mode, a viewing entity may be provisioned to receive temporary backup control of the vehicle, such that the viewing entity may safely navigate a vehicle through a zone associated with poor signal strength. In some embodiments, the viewing entity maintains a continuous visual line of sight to the vehicle while navigating the vehicle through the zone associated poor signal strength, which may mitigate and/or circumvent technical challenges associated with remotely navigating a vehicle in areas where position signals from satellites are weak or unavailable.

Some embodiments receive a travel pathway for a vehicle and automatically obtain satellite-based positioning data for the travel pathway from a remote computing environment. In some contexts, the remote computing environment generates the satellite-based positioning data based at least in part on the travel pathway. Some embodiments obtain metadata associated with the travel pathway and provision the metadata to the remote computing environment as an additional input to generation of satellite-based positioning data. In some contexts, the metadata may include a travel date, departure time, arrival time, travel duration, weather conditions, mappings of ground infrastructure and topography along the travel pathway, and/or the like. Some embodiments generate indications for signal strength along the travel pathway based at least in part on the travel pathway and the satellite-based positioning data. Some embodiments partition the travel pathway into a plurality of zones based at least in part on the signal strength indications, where the plurality of zones include one or more zones associated with poor signal strength. Some embodiments generate, based at least in part on the signal strength indications and zones, one or more visual observer indications that that indicate a position along the travel pathway at which a transition of the vehicle from the BVLOS mode to a visual observer mode may be initiated. In some contexts, the visual observer mode enables backup control of the vehicle by a viewing entity while the vehicle is within a predetermined proximity of the zone associated with poor signal strength.

Some embodiments, automatically modify the travel pathway based at least in part on the visual observer indication and provision the modified travel pathway to a zone-remote control system that exercises overriding control over the vehicle. Some embodiments automatically initiate a transfer of the vehicle from the BVLOS mode to the visual observer mode in response to determining the vehicle is approaching the zone associated with poor signal strength, which may cause the corresponding viewing entity to be provisioned temporary backup control of the vehicle while the vehicle is within a predetermined proximity of the zone. Some embodiments determine availability of viewing entities within the zone associated with poor signal strength. For example, some embodiments may provision a visual observation request to a viewing entity and, in response, receive availability data from the viewing entity, which may be used to determine an availability of the viewing entity. Some embodiments generate a travel pathway adjustment in response to determining that no viewing entity is available, where the travel pathway adjustment may revise the course of travel for the vehicle such that the vehicle circumvents one or more zones associated with poor signal strength. Some embodiments determine a period in which the viewing entity is unavailable and modify the travel pathway to direct movement of the vehicle through the corresponding zone at a time interval outside of the unavailable period.

Some embodiments generate an augmentation system indication in response to determining that no viewing entity is available, where the augmentation system indication indicates a position along the travel pathway at which a connection between the vehicle and an augmentation system is established to enable the vehicle to receive supplemental positioning data from the augmentation system. In some embodiments, the positioning data from the augmentation system enables the vehicle and/or zone-remote control system to compensate for deficiencies and/or unavailability of satellite-sources position signals, which may support accurate and precise navigation of the vehicle in instances where a viewing entity is not available to receive backup control of the vehicle.

In accordance with a first aspect of the disclosure, a computer-implemented method for controlling vehicle navigation is provided. The computer-implemented method is executable utilizing any of a myriad of computing device(s) and/or combinations of hardware, software, firmware. In some example embodiments an example computer-implemented method includes receiving a travel pathway for a vehicle. In some example embodiments, the method further includes generating a plurality of signal strength indications for the travel pathway based at least in part on the travel pathway and satellite-based positioning data obtained from a remote computing environment. In some example embodiments, the method further includes generating, based at least in part on the plurality of signal strength indications for the travel pathway, a plurality of zones along the travel pathway. In some example embodiments, the plurality of zones comprises at least one zone associated with poor signal strength. In some example embodiments, the method further includes generating, based at least in part on the plurality of signal strength indications and the plurality of zones, one or more visual observer indications that indicate a position along the travel pathway at which a transition of the vehicle from a beyond visual line-of-sight (BVLOS) mode to a visual observer mode is initiated. In some example embodiments, the visual observer mode enables backup control of the vehicle by a viewing entity while the vehicle is within a predetermined proximity of the at least one zone associated with poor signal strength. In some example embodiments, the method further includes modifying the travel pathway based at least in part on the one or more visual observer indication and providing the modified travel pathway to one or more zone-remote control systems configured to control the vehicle.

In some example embodiments, the method further includes generating the one or more visual observer indications further based at least in part on a real-time monitored position of the vehicle along the travel pathway. In some example embodiments, the method further includes causing rendering of a graphical user interface (GUI) at a computing device of the one or more zone-remote control systems. In some example embodiments, the GUI comprises a mapping of the travel pathway, a set of indicia based at least in part on the plurality of zones rendered along the travel pathway, and one or more additional indicia based at least in part on the one or more visual observer indications. In some example embodiments, the method further includes in response to determining the vehicle is located within the predetermined proximity of the at least one zone associated with poor signal strength, transitioning the vehicle from the BVLOS mode to the visual observer mode to enable the backup control of the vehicle by the viewing entity.

In some example embodiments, the method further includes establishing a connection between the one or more zone-remote control systems and the vehicle to enable control and monitoring of the vehicle by the one or more zone-remote control entities. In some example embodiments, transitioning the vehicle from the BVLOS mode to the visual observer mode comprises establishing a connection between a computing device of the viewing entity to enable the backup control of the vehicle by the viewing entity. In some example embodiments, while the vehicle is in the visual observer mode, the connection between the one or more zone-remote control systems and the vehicle is maintained to continue outputting of vehicle data via the one or more zone-remote control systems and granting an override of control of the vehicle to the one or more zone-remote control systems. In some example embodiments, the method further includes in response to determining the vehicle has moved beyond the predetermined proximity of the at least one zone associated with poor signal strength, automatically transitioning the vehicle from the visual observer mode to the BVLOS mode, wherein the transitioning of the vehicle to the BVLOS mode disables the backup control of the vehicle by the viewing entity.

In some example embodiments, the method further includes, in response to determining that no viewing entity is available to exercise the backup control of the vehicle while the vehicle is within the predetermined proximity of the at least one zone associated with the poor signal strength i) generating an onboard sensor indication, wherein the onboard sensor indication indicates a position along the travel pathway at which a transition of the vehicle from the BVLOS mode to an onboard sensor mode is initiated, wherein, in the onboard sensor mode, the vehicle navigates along the travel pathway using one or more onboard sensors; and the one or more visual observer indications indicate a lack of availability of viewing entities for the at least one zone associated with poor signal strength, and ii) modifying the travel pathway further based at least in part on the onboard sensor indication.

In some example embodiments, the method further includes, in response to determining that no viewing entity is available to exercise the backup control of the vehicle while the vehicle is within the predetermined proximity of the at least one zone associated with poor signal strength i) generating an augmentation system indication, wherein: the augmentation system indication indicates a position along the travel pathway at which a connection between the vehicle and an augmentation system is established; and the augmentation system is located within the predetermined proximity of the at least one zone associated with poor signal strength and provides positioning data to the vehicle via the connection, and ii) modifying the travel pathway further based at least in part on the augmentation system indication.

In some example embodiments, the method further includes generating an estimated travel time of the vehicle based at least in part on the modified travel pathway and providing the estimated travel time to the one or more zone-remote control systems. In some example embodiments, the method further includes causing i) provision of a visual observation request to the viewing entity, ii) receiving a response to the visual observation request comprising availability data associated with the viewing entity, iii) determining the availability of the viewing entity based at least in part on the availability data, and iv) generate the one or more visual observer indications further based at least in part on the availability of the viewing entity. In some example embodiments, the method further includes generating a travel pathway adjustment based at least in part on the availability of the viewing entity and modifying the travel pathway further based at least in part on the travel pathway adjustment.

In some example embodiments, the method further includes determining an unavailable period of the viewing entity. In some example embodiments, the method further includes modifying the travel pathway to direct movement of the vehicle through the at least one zone associated with poor signal strength during a time interval outside of the unavailable period. In some example embodiments, the method further includes generating a travel pathway adjustment in response to determining that no viewing entity is available to exercise the backup control of the vehicle while the vehicle is within the predetermined proximity of the at least one zone associated with poor signal strength. In some example embodiments, the method further includes modifying the travel pathway based at least in part on the travel pathway adjustment, wherein the travel pathway adjustment directs movement of the vehicle to circumvent the at least one zone associated with poor signal strength while traveling along the travel pathway.

In some example embodiments, the method further includes obtaining metadata associated with the travel pathway, wherein the satellite-based positioning data is further based at least in part on the metadata. In some example embodiments, the metadata comprises a travel date. In some example embodiments, the travel pathway comprises an origin point and a destination point for the vehicle and the metadata comprises a target travel time between the origin point and the destination point. In some example embodiments, the metadata comprises at least one of one or more weather conditions or a mapping of ground infrastructure and topography along the travel pathway.

In accordance with another aspect of the present disclosure, a computing apparatus for controlling vehicle navigation is provided. The computing apparatus in some embodiments includes at least one processor and at least one non-transitory memory, the at least non-transitory one memory having computer-coded instructions stored thereon. The computer-coded instructions in execution with the at least one processor causes the apparatus to perform any one of the example computer-implemented methods described herein. In some other embodiments, the computing apparatus includes means for performing each step of any of the computer-implemented methods described herein.

In accordance with another aspect of the present disclosure, a computer program product for controlling vehicle navigation is provided. The computer program product in some embodiments includes at least one non-transitory computer-readable storage medium having computer program code stored thereon. The computer program code in execution with at least one processor is configured for performing any one of the example computer-implemented methods described herein.

### Definitions

"Vehicle" refers to any apparatus that traverses throughout an environment by any mean of travel. In some contexts, a vehicle transports goods, persons, and/or the like, or traverses itself throughout an environment for any other purpose, by means of air, sea, or land. In some embodiments, the vehicle is remotely controllable such that a remote operator may initiate and direct movement of the vehicle. In some embodiments, the vehicle traverses throughout an environment along a travel pathway. For example, a vehicle may traverse from an origin point to a destination point along a predetermined travel pathway between the origin point and the destination point. The vehicle may navigate along a travel pathway autonomously, semi-autonomously, or under manual control by a zone-remote control system. In some embodiments, a vehicle is ground-based, air-based, water-based, space-based (e.g., outer space or within an orbit of a planetary body, a natural satellite, or artificial satellite), and/or the like. In some embodiments, the vehicle is an aerial vehicle capable of air travel. Non-limiting examples of aerial vehicles include urban air mobility vehicles, drones, helicopters, fully autonomous air vehicles, semi-autonomous air vehicles, airplanes, orbital craft, spacecraft, and/or the like. In some embodiments, the vehicle is unmanned. For example, the vehicle may be a powered, aerial vehicle that does not carry a human operator and is piloted by a remote operator using a control station. In some embodiments, the vehicle is an aquatic vehicle capable of surface or subsurface travel through and/or atop a liquid medium (e.g., water, water-ammonia solution, other water mixtures, and/or the like). Non-limiting examples of aquatic vehicles include unmanned underwater vehicles (UUVs), surface watercraft (e.g., boats, jet skis, and/or the like), amphibious watercraft, hovercraft, hydrofoil craft, and/or the like. As used herein, vehicle may refer to vehicles associated with urban air mobility (UAM).

"UAM" refers to "urban air mobility," which includes all aerial vehicles and functions for aerial vehicles that are capable of performing vertical takeoff and/or vertical landing procedures. Non-limiting examples of UAM aerial vehicles include passenger transport vehicles, cargo transport vehicles, small package delivery vehicles, unmanned aerial system services, autonomous drone vehicles, and ground-piloted drone vehicles, where any such vehicle is capable of performing vertical takeoff and/or vertical landing.

"Zone-remote control system" refers to refers to a system that, via input of instructions and/or commands from a human and/or automated computing entity, remotely controls operation of one or more vehicles and/or one or more systems related to preparing a travel pathway for a vehicle and controlling and monitoring the vehicle along the travel pathway. For example, a zone-remote control system may be a human and/or automated computing entity that, via input of instructions and/or commands, controls operation of one or more vehicles via a control station. In some embodiments, a zone-remote control system may embody specially-configured computing resources and functions for UAM control.

"Control station" refers to any number of computing device(s) and/or other system(s) embodied in hardware, software, firmware, and/or the like that control, operate, receive and maintain data respective to, and/or monitor one or more vehicles. For example, a control station may include or embody a computing terminal by which one or more vehicles are remotely operated. In some embodiments, the control station includes one or more displays by which data corresponding to one or more vehicles and/or travel pathways is displayed to an operator of the control station and/or zone-remote control system. In some embodiments, the control station includes one or more input devices by which instructions or commands for controlling vehicles are received by the control station via user input provided to an input device of a zone-remote control system.

"Travel pathway" refers to a data construct that indicates an actual or planned course of travel between two or more locations. For example, a travel pathway may indicate a planned course of travel for a vehicle between an origin point and a destination point. The travel pathway may be embodied any number of computer-readable storage media, such as one or more digital files. In some contexts, a travel pathway includes a track, route, flight path, flight plan, course, movement trajectory, bearing, float plan, and/or the like. As one example, a travel pathway may refer to a flight path that indicates a trajectory of air travel for a UAV between a first location and a second location. In some embodiments, the travel pathway includes one or more waypoints, such as an origin point and one or more destination points. In some embodiments, a travel pathway includes metadata including identifying information for one or more vehicles associated with the travel pathway, a target or expected travel time, a travel data, one or more weather conditions along the travel pathway, one or more mappings of ground infrastructure and/or topography along or proximate to the travel pathway, and/or the like.

In some embodiments, techniques of the present disclosure modify a travel pathway to include indications of information associated with navigating a vehicle along the travel pathway. As one example, embodiments of the present disclosure may modify a travel pathway to include one or more indications for a position along the travel pathway to transition between modes for monitoring and controlling a vehicle (e.g., beyond visual line of sight (BVLOS) mode, visual observer mode, onboard sensor mode, and/or the like). As another example, embodiments of the present disclosure may modify a travel pathway to include one or more indications of signal strength along the travel pathway and/or indications for zones associated with various signal strengths.

"Position signal" refers to any data construct that indicates a position of a signal-providing entity, celestial body, and/or the like. In some embodiments, a position signal includes data that provides (e.g., or from which may be generated) location coordinates of one or more signal-providing entities or celestial bodies at one or more discrete time points. In some embodiments, the signal-providing entity is an artificial satellite that transmits satellite-based positioning data to a receiving entity, where the receiving entity may obtain position signal from the satellite-based positioning data. In some contexts, such data may be referred to as "ephemeris" data or "ephemeris." As one example, a position signal may embody a signal from a global navigation satellite system (GNSS) or a regional navigation satellite system (RNSS), either of which is generated and transmitted by an artificial satellite. Example GNSSs and RNSSs from which position signals may be obtained include Global Positioning System (GPS), Global Navigation Satellite System (GLONASS), BeiDou Navigation Satellite System, Galileo, Quasi-Zenith Satellite System, and India Regional Satellite System (IRNSS). As another example, a position

"Satellite-based positioning data" refers to any data object indicative of position signal that is obtained from a satellite-based source of position signal. For example, satellite-based positioning data may be data obtained from a GPS satellite, where the data indicates a position signal. In some embodiments, satellite-based positioning data is received via a receiver circuit of a computing device. For example, GPS data from a GPS satellite may be received by a GPS receiver circuit of a computing device aboard a vehicle. In some embodiments, satellite-based positioning data is received and stored at a remote computing environment such that the satellite-based positioning data may be subsequently retrieved by or provided to a second computing environment for use in navigation optimization techniques described herein. For example, a vehicle monitoring system may obtain satellite-based positioning data from a remote computing environment and generate indications of signal strength for one or more geographic regions based at least in part on the satellite-based positioning data.

"Signal strength" refers to any measurement of quality of a signal. For example, a signal strength may be a decibel (dB) gain value of a position signal obtained by a receiver circuit via receipt of satellite-based positioning data. As another example, a signal strength may be a carrier-to-noise ratio of a position signal. Signal strength may be impacted by a variety of factors including satellite position, satellite distribution, signal reflectance or absorption (e.g., by ground topography, ground infrastructure, atmospheric layers, and/or the like), receiver circuit construction, receiver circuit integrity, and/or the like. For example, a geographic area may be associated with varying levels of signal strength at different time intervals due to movement and changing distribution of satellites from which position signals are obtained. As another example, a geographic area may be associated with reduced signal strength due to high density of buildings or other ground infrastructure that reflects or blocks position signals. A data object that indicates a signal strength may be referred to as a "signal strength indication." For example, a signal strength indication may indicate a poor or nominal level of signal strength.

"Zone" refers to any physically-defined area in an environment. A zone may be proximate to and/or include at least a portion of a travel pathway. In some embodiments, zone refers to a physical area at a particular time interval, such as a particular time of day, time of year, and/or the like. A zone may be a terrestrial region (e.g., a ground-based area), a region of airspace, an aquatic area, and/or the like. A zone may be associated with one or more signal strengths. For example, a zone comprising a dense urban area may be associated with a poor signal strength. As another example, a zone may be associated with a nominal signal strength during a first time interval and a poor signal strength during a second time interval. The second time interval may correspond to a period of unavailability or poor distribution of satellites, which may reduce signal strength. Alternatively, the second time interval may correspond to a period of poor weather or other atmospheric condition that reduces signal strength (e.g., storms, solar activity, pressure, humidity, temperature, and/or the like).

"Position" refers to any physically-defined location in an environment. In some embodiments, a position is expressed by one or more geographic coordinates, such as longitude, latitude, altitude, global area reference system (GARS) code, open location code, geohash, and/or the like. In some embodiments, in addition to a physically-defined location, "position" further refers to a particular time or time interval at the physically-defined location.

"Beyond visual line of sight (BVLOS) mode" refers to an operational state for controlling a vehicle using remote means and based upon a received position of the vehicle. For example, BVLOS mode may be an operational state in which a vehicle is remotely monitored and piloted by a zone-remote control system in communication with the vehicle, such as an operator of a control station (control station). The vehicle may determine its current location using an onboard receiver circuit that receives satellite-based positioning data from satellites. The zone-remote control system may receive the current location from the vehicle and navigate the vehicle based thereon. The safety and effectiveness of BVLOS mode may be dependent upon the quality with which the vehicle position is determined based at least in part on the satellite-based positioning data. For example, when the vehicle moves into a zone associated with poor signal strength (e.g., based at least in part on satellite position, satellite distribution, atmospheric conditions, ground topography and/or infrastructure, and/or the like), the zone-remote control system may receive an inaccurate estimation of position from the vehicle. The inability to accurately monitor the current location of the vehicle may compromise the ability of the zone-remote control system to navigate the vehicle accurately and safely along the travel pathway through the zone associated with poor signal strength. To address this challenge, the operational state for the vehicle may be transitioned from the BVLOS mode to another operational state, such as a visual observer mode or onboard sensor mode.

"Visual observer mode" refers to an operational state for controlling a vehicle via a viewing entity that is positioned for visual line of sight to the vehicle. For example, in a visual observer mode, a vehicle may be controlled by a viewing entity that uses a computing device to control the vehicle while visually monitoring the current position of the vehicle. The visual observer mode may improve navigational accuracy and safety of the vehicle through a zone associated with poor signal strength (e.g., where operation of the vehicle in a BVLOS mode may be unsafe or inaccurate due to compromised vehicle tracking capabilities). For example, upon a vehicle moving within a predetermined proximity of a zone associated with poor signal strength, control of the vehicle may be transitioned from BVLOS mode to visual observer mode such that a ground-based entity located within the zone may visually observe and navigate the vehicle through the zone. The transition from BVLOS mode to visual observer mode may include temporarily provisioning vehicle control and monitoring privileges to the viewing entity while the vehicle is within the predetermined proximity of the zone associated with poor signal strength. The operator of the vehicle in BVLOS may also continue to hold vehicle control and monitoring privileges throughout navigation of the vehicle through the zone associated with poor signal. For example, in visual observer mode, a zone-remote control system may be assigned elevated privileges to control and monitor the vehicle as compared to the temporary control and monitoring privileges provisioned to the viewing entity.

"Viewing entity" refers to any number of persons or automated computing entities that control and monitor a vehicle through a zone and possess visual line of sight to the vehicle throughout navigation of the vehicle through the zone. For example, a viewing entity may be an individual with visual line of sight to an unmanned aerial vehicle (UAV) while the UAV flies within a predetermined proximity of a zone associated with poor position signal. The individual may possess a computing device by which the individual remotely pilots the UAV while the vehicle is configured to the visual observer mode within the predetermined proximity of the zone associated with poor position signal. The viewing entity may be provisioned temporary vehicle control and monitoring privileges for navigating the vehicle while the vehicle is configured to the vehicle is configured to the visual observer mode. The viewing entity may use any number of computing devices and/or other systems embodied in hardware, software, firmware, and/or the like that communicate with and control the vehicle and communicate with a zone-remote control system assigned to navigate the vehicle along a travel pathway.

"Visual observer indication" refers to a data object that defines where along a travel pathway to transition a vehicle from the BVLOS mode to the visual observer mode. In some embodiments, the visual observer indication specifies a zone associated with poor signal strength and a predetermined proximity around the zone. For example, the visual observer indication may specify a zone within a dense urban environment and a predetermined proximity around the zone. A travel pathway may be modified to include the visual observer indication such that, upon a vehicle entering within the predetermined proximity of the zone while in the BVLOS mode, the vehicle is transitioned from the BVLOS mode to the visual observer mode (e.g., enabling a viewing entity may monitor and navigate the vehicle through the zone). In some embodiments, the visual observer indication includes a time interval for the zone associated with poor signal strength such that the vehicle is only transitioned from the BVLOS mode to the visual observer mode when the vehicle moves within the predetermined proximity of the zone during the indicated time interval. The time interval may correspond to a period of satellite unavailability, suboptimal satellite distribution, and/or other factors in which signal strength within the zone becomes suboptimal.

"Visual observation request" refers to a request by a vehicle monitoring system to a viewing entity. In sone contexts, the visual observation request is a request for the viewing entity to temporarily exercise backup control and monitor a vehicle while the vehicle is within proximity of a zone associated with poor signal strength. In some embodiments, a visual observation request is provided to a viewing entity to determine whether the viewing entity is available to pilot a vehicle in the visual observer mode (e.g., by receiving temporary backup control and monitoring privileges for the vehicle). In some embodiments, the visual observation request indicates a particular vehicle to be controlled and monitored, a zone, and a predetermined proximity around the zone, within which the vehicle will be configured to the vehicle observer mode and, therefore, require visual line of sight observation and navigation by a viewing entity. In some embodiments, the visual observation request includes a time interval corresponding to when the vehicle is anticipated to be configured to the visual observer mode. For example, the visual observation request may indicate a time at which a vehicle is scheduled to move within a predetermined proximity of a zone associated with poor signal strength.

In some contexts, a viewing entity receives and responds to a visual observer request via a computing device. For example, a computing device may receive a visual observer request and render a graphical user interface (GUI) for displaying and receiving a response to the visual observer request. A viewing entity may respond to the request by providing one or more user inputs to the computing device. Alternatively, the computing device (or another system associated with managing availability data associated with the viewing entity) may automatically respond to the visual observer request based at least in part on determining the availability of the viewing entity to fulfill the visual observer request (e.g., whether the viewing entity is available to monitor and navigate the vehicle within an indicated zone at an indicated time). In some embodiments, in instances where the viewing entity accepts the visual observer request, a travel pathway is modified to include a visual observer indication corresponding where and when along the travel pathway the corresponding vehicle will be transitioned from the BVLOS mode to the visual observer mode such that the viewing entity is temporarily provisioned control and monitoring privileges for the vehicle. In some embodiments, in instances where all viewing entities for a zone reject a visual observer request and/or a determination is made that no viewing entity is available, a travel pathway may instead be modified to include a travel pathway adjustment or an indication of a position along the travel pathway to transition the vehicle to an onboard sensor mode.

"Travel pathway adjustment" refers to any navigational or temporal change to a travel pathway associated with a vehicle. In some contexts, a travel pathway adjustment changes a physical route by which the vehicle will travel. For example, in response to lack of available viewing entities within a zone associated with poor position signal, a travel pathway adjustment may change a travel pathway such that the corresponding vehicle is routed around the zone associated with poor position signal. As another example, a travel pathway adjustment may change a travel speed, departure time, arrival time, or other temporal factor such that a vehicle will pass through a zone during a time interval in which the signal strength for the zone is nominal.

"Onboard sensor mode" refers to an operational state in which a vehicle navigates autonomously based at least in part on one or more other sensors of the vehicle in a circumstance where satellite-based positioning data is not usable (e.g., due to unavailability, poor signal strength, excess noise, low reliability due to signal absorption or reflection, and/or the like).. In some embodiments, the onboard sensors include imaging devices such as cameras, infrared sensors, and/or the like. In some embodiments, the onboard sensors include ultrasonic sensors, radar sensors, and/or the like. For example, when configured to the onboard sensor mode, a UAV may autonomously navigate through a zone of a travel pathway by obtaining and processing image captures of the environment.

"Augmentation system" refers to a computing entity that provides positioning data to at least one vehicle. In some embodiments, the augmentation system supplements and/or enhances satellite-based positioning data. In some embodiments, positioning data provided by the augmentation system is used to correct for clock drift, ephemeris, ionospheric delay, satellite unavailability, and/or the like. For example, the augmentation system may be a differential global positioning system (DGPS) that provides position differential corrections to offset deficiencies in signal strength. As another example, the augmentation system may receive and relay positioning data from satellites that are unavailable for a zone. In some embodiments, a vehicle and/or zone-remote control system is configured to receive positioning data from an augmentation system in instances where no viewing entity is available to temporarily navigate a vehicle through a zone associated with poor signal strength. The vehicle (or zone-remote control system) may augment or supplement satellite-based positioning data using the positioning data from the augmentation system to improve safety and accuracy of vehicle navigation through the zone associated with poor signal strength.

### Example Systems and Apparatuses of the Disclosure

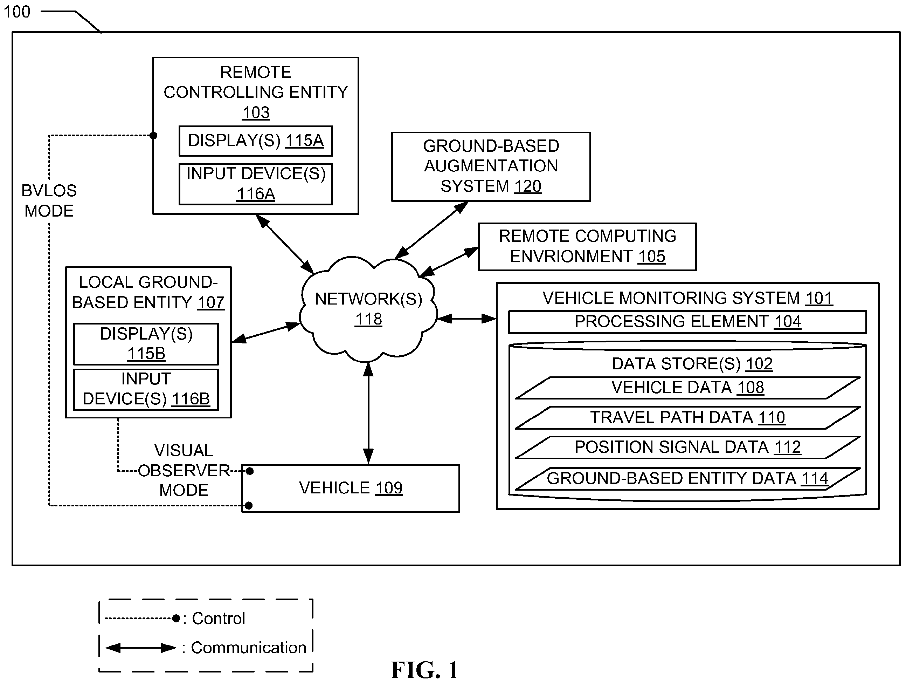

FIG. 1 illustrates a block diagram of a networked environment that may be specially configured within which embodiments of the present disclosure may operate. Specifically, FIG. 1 depicts an example networked environment 100. As illustrated, the networked environment 100 includes a vehicle monitoring system 101, one or more zone-remote control systems 103, a remote computing environment 105, one or more viewing entities 107, one or more vehicles 109, and one or more augmentation systems 120.

In some embodiments, the vehicle monitoring system 101 includes a vehicle monitoring apparatus 200 (also referred to herein as "apparatus") that performs various functions and actions related to enacting techniques and processes described herein for controlling vehicle navigation, such as by processing and modifying travel pathways, generating indications of signal strength along a travel pathway, and determining availability of viewing entities 107 to exercise backup control of a vehicle 109 while the vehicle 109 is proximate to an area of poor signal strength. In some embodiments, the apparatus 200 includes one or more circuitries (e.g., physical, virtual, and/or the like) that intake and process data from other computing devices and systems including zone-remote control systems 103, remote computing environments 105, viewing entities 107, vehicles 109, augmentation systems 120, and/or the like. In some embodiments, the apparatus 200 includes one or more circuitries or interfaces that communicate with zone-remote control systems 103, remote computing environments 105, viewing entities 107, vehicles 109, augmentation systems 120, and/or the like. For example, the apparatus 200 may include a communication interface that enables communication between the vehicle monitoring system 101 and one or more viewing entities 107. In another example, the apparatus 200 may include a second communication interface that enables communication between the vehicle monitoring system 101 and a zone-remote control system 103.

In some embodiments, the apparatus 200 includes travel pathway processing circuitry that enables the vehicle monitoring system 101 to carry out various functions described herein including generating indications of position signal strength along a travel pathway, generating zones of varying signal strength along the travel pathway, generating visual observer indications, augmentation system indications, onboard sensor indications, and/or the like, and modifying travel pathways. In some embodiments, via the apparatus 200, the vehicle monitoring system 101, causes the establishment of connections between the zone-remote control system 103 or viewing entity 107 and a vehicle 109 to enable the zone-remote control system 103 or viewing entity 107 to monitor and control the vehicle 109. In some embodiments, when the vehicle 109 is transitioned to the BVLOS mode, the vehicle monitoring system 101 causes establishment of a first connection between the zone-remote control system 103 and the vehicle 109 to grant vehicle control and enable outputting of vehicle data 108 to the zone-remote control system 103. In some embodiments, when the vehicle 109 is transitioned to the visual observer mode, the vehicle monitoring system 101 causes establishment of a second connection between the viewing entity 107 and the vehicle 109 to grant the viewing entity 107 backup control of the vehicle 109. In some embodiments, while the vehicle 109 is configured to the visual observer mode, the vehicle monitoring system 101 causes preservation of the first connection to continue outputting of vehicle data 108 to the zone-remote control system 103 and grant an override of vehicle control to the zone-remote control system 103. In some embodiments, the apparatus 200 includes input/output circuitry that enables a zone-remote control system or viewing entity to provide input to and receive output from the vehicle monitoring system 101. For example, the input/output circuitry may include or embody user interfaces, input devices, and/or the like for receiving input from and providing output to a zone-remote control system 103 or viewing entity 107.

In some embodiments, the vehicle monitoring system 101 includes one or more data stores 102 that store data associated with the operation of the various applications, apparatuses, and/or functional entities described herein. In some embodiments, data stored at the data store 102 includes vehicle data 108, travel pathway data 110, position signal data 112, viewing entity data 114, and/or the like. In some embodiments, the vehicle data 108 includes data that enables monitoring and control of the vehicle 109 by the zone-remote control system 103 or viewing entity 107. In some embodiments, the vehicle data 108 includes one or more vehicle identifiers including serial numbers, equipment identifiers, and/or the like that uniquely identify a vehicle 109 and/or enable tracking and control of the vehicle 109. In some embodiments, the vehicle data 108 includes configuration data that enables communication with and/or control of the vehicle. For example, the vehicle data 108 may include a cellular identifier, radio identifier, satellite identifier, communication protocol and/or the like by which a connection may be established between the vehicle 109 and a zone-remote control system 103 or viewing entity 107. In another example, the vehicle data 108 may include a transponder identifier for tracking a location of the vehicle 109. In some embodiments, the vehicle data 108 includes performance data for the vehicle 109 including power supply type, power supply capacity, travel range, control range, maximum altitude, payload capacity, maximum speed, and/or the like. In some embodiments, the vehicle data 108 includes sensor data associated with one or more sensors 111 of the vehicle 109 (e.g., which may be used by the vehicle 109 to navigate along a travel pathway).

In some embodiments, the travel pathway data 110 includes one or more travel pathways and information associated with a travel pathway, such as metadata, signal strength indications, travel pathway zones, travel pathway adjustments, visual observer indications, augmentation system indications, onboard sensor indications, and/or the like. For example, the travel pathway data 110 may include a travel pathway, weather information associated with regions along the travel pathway, and mappings of ground and infrastructure along the travel pathway. As another example, the travel pathway data 110 may include desired performance metrics for navigation of the vehicle 109 along the travel pathway, such as desired vehicle speed, travel duration, departure time, arrival time, and/or the like. In some embodiments, the travel pathway data 110 includes indications of whether a travel pathway for a vehicle 109 may be geographically or temporally adjusted. For example, the travel pathway data 110 may indicate whether a travel pathway may be geographically adjusted to circumvent a zone associated with poor signal strength. As another example, the travel pathway data 110 may indicate whether a travel pathway may be temporally adjusted such that a vehicle 109 avoids traversing a zone during a time interval of poor signal strength or position signal unavailability.

In some embodiments, the position signal data 112 includes satellite-based positioning data, augmentation system-based positioning data, signal strength indications, and/or the like. For example, the position signal data 112 may include satellite-based positioning data obtained from a remote computing environment 105. As another example, the position signal data 112 may include positioning data obtained from an augmentation system 120. In some embodiments, the position signal data 112 includes threshold values or ranges that may be used by the vehicle monitoring system 101 to generate zones along a travel pathway and categorize the zones as being associated with poor or nominal signal strength. For example, the position signal data 112 may include a first range of signal strength values associated with a "poor" category of signal strength and a second range of signal strength values associated with a "nominal" category of signal strength. In some embodiments, the position signal data 112 includes historical values of signal strength along one or more travel pathways, geographical regions, and/or the like.

In some embodiments, the viewing entity data 114 includes data associated with one or more viewing entities 107. In some embodiments, the viewing entity data 114 includes data that enables the vehicle monitoring system 101 to communicate with and provision vehicle control privileges to the viewing entity 107. In some embodiments, the viewing entity data 114 includes one or more identifiers including serial numbers, equipment identifiers, and/or the like that uniquely identify a viewing entity 107. In some embodiments, the viewing entity data 114 includes configuration data that enables communication with the viewing entity 107. For example, the viewing entity data 114 may include a cellular identifier, radio identifier, satellite identifier, communication protocol and/or the like by which a connection may be established between the vehicle monitoring system 101 and viewing entity 107 or between a vehicle 109 and the viewing entity 107. In some embodiments, the viewing entity data 114 includes a geographical location of the viewing entity 107. In some embodiments, the viewing entity data 114 includes a schedule of geographical locations of the viewing entity 107. In some embodiments, the viewing entity data 114 includes an operational range of the viewing entity 107, which may enable the vehicle monitoring system 101 to determine geographical locations to which the viewing entity 107 may be deployed. In some embodiments, the viewing entity data 114 includes availability data associated with the viewing entity 107. For example, the viewing entity data 114 may include indications of vehicle control missions assigned to the viewing entity 107 including information identifying a vehicle 109 for which the viewing entity 107 receives backup control, information identifying a zone within which the viewing entity 107 exercises backup control of the vehicle 109, and temporal information indicative of when the viewing entity 107 will exercise backup control of the vehicle 109.

In some embodiments, the zone-remote control system 103 remotely controls operation of one or more vehicles and/or one or more systems related to preparing a travel pathway for a vehicle and controlling and monitoring the vehicle along the travel pathway. In some embodiments, the zone-remote control system 103 includes one or more control stations 116 by which a human or automated computing entity carries out functions and processes of the zone-remote control system 103. In some embodiments, the control station 116 includes any number of computing device(s) and/or other system(s) embodied in hardware, software, firmware, and/or the like that control, operate, receive and maintain data respective to, and/or monitor one or more vehicles 109. In some embodiments, the zone-remote control system 103 is configured to communicate with the vehicle monitoring system 101. For example, the zone-remote control system 103 may, via the control station 116, provide a travel pathway and metadata to the vehicle monitoring system 101. In some embodiments, the zone-remote control system 103 exercises overriding control of the vehicle 109. For example, the zone-remote control system 103 may exercise overriding control of vehicle movement along the travel pathway including portions of the travel pathway in which backup control the vehicle is temporarily provisioned to a viewing entity 107.

In some embodiments, the zone-remote control system 103 establishes a connection between the control station 116 and the vehicle 109 via a network 118. In some embodiments, the connection enables the zone-remote control system 103 to monitor and control the vehicle 109. For example, via the connection, the zone-remote control system 103 may receive a real-time position of the vehicle 109, readings from sensors 111 of the vehicle 109, vehicle performance indications (e.g., speed, power level, component integrity), and/or the like. As another example, via the connection and control station 116, the zone-remote control system 103 may provision commands to the vehicle 109, such as to steer the vehicle 109, cause the vehicle 109 to communicate with an augmentation system 120, or initiate a transition of the vehicle 109 between operating modes (e.g., BVLOS mode, visual observer mode, onboard sensor mode, and/or the like).

In some embodiments, the zone-remote control system 103 provisions commands to the vehicle 109 in response to receiving a command from the vehicle monitoring system 101 or based at least in part on a modified travel pathway received from the vehicle monitoring system 101. For example, the vehicle monitoring system 101 may modify a travel pathway to include a visual observer indication that indicates a position along the travel pathway at which a transition of the vehicle 109 from a BVLOS mode to a visual observer mode is initiated. In some contexts, the zone-remote control system 103 may receive the modified travel pathway from the vehicle monitoring system and, in response to determining the vehicle 109 is proximate to the indicated position, initiate a transition of the vehicle 109 from the BVLOS mode to the visual observer mode.

In some embodiments, the remote computing environment 105 includes any number of computing device(s) and/or other system(s) embodied in hardware, software, firmware, and/or the like that generate data related to a travel pathway and provision the data to the vehicle monitoring system 101. For example, the remote computing environment 105 may include or embody a service that predicts strength or availability of satellite-sourced position signals, such as global navigation satellite system (GNSS) Foresight. In some embodiments, the remote computing environment 105 generates satellite-based positioning data based at least in part on a travel pathway, which may be provisioned to the remote computing environment 105 by the vehicle monitoring system 101. For example, in an aerial context, the remote computing environment 105 may receive a flight path for a UAV and generate GPS data indicative of GPS signal strength along the travel pathway. In some embodiments, the remote computing environment 105 generates satellite-based positioning data further based at least in part on metadata associated with the travel pathway, such as a travel date, desired travel time, departure time, arrival time, vehicle performance capabilities, weather conditions, mappings of topography and/or infrastructure, air traffic, and/or the like. For example, the remote computing environment 105 may generate multiple sets of satellite-based positioning data for a travel pathway, where each set may correspond to a different condition for the travel pathway, such as a different departure time, weather condition, travel date, and/or the like. Additionally, in some embodiments, one or more remote computing environments 105 are configured to provision environment data, mapping data, vehicle traffic data, and/or the like to the vehicle monitoring system 101. For example, a remote computing environment 105 may include a weather forecasting service. As another example, a remote computing environment 105 may include a service that generates mappings of ground topography and/or infrastructure. In another example, in an aerial context, a remote computing environment 105 may include a service that reports live and/or scheduled air traffic information for one or more geographic regions.

In some embodiments, the viewing entity 107 controls and monitors a vehicle through a zone of a travel pathway while maintaining visual line of sight to the vehicle throughout navigation of the vehicle through the zone. For example, a viewing entity may be an individual with visual line of sight to an unmanned aerial vehicle (UAV) while the UAV flies within a predetermined proximity of a zone associated with poor position signal. The individual may possess a computing device by which the individual remotely pilots the UAV while the vehicle is configured to the visual observer mode within the predetermined proximity of the zone associated with poor position signal. The viewing entity 107 may be provisioned temporary vehicle control and monitoring privileges for navigating the vehicle while the vehicle is configured to the vehicle is configured to the visual observer mode. The viewing entity 107 may use any number of computing devices and/or other systems embodied in hardware, software, firmware, and/or the like that communicate with and control the vehicle 109 and communicate with a zone-remote control system 103 assigned to manage movement of the vehicle 109 along a travel pathway.

In some embodiments, the zone-remote control system 103 and viewing entity 107 include one or more displays 117A, 117B on which graphical user interfaces (GUIs) and other information related to travel pathways or vehicles may be rendered. In some embodiments, a display 117A, 117B includes a CRT (cathode ray tube), LCD (liquid crystal display) monitor, LED (light-emitting diode) monitor, and/or the like, for displaying information/data to an operator of the zone-remote control system 103 or a viewing entity 107. In one example, the display 117A, 117B may include a GUI that displays a mapping of a travel pathway for a vehicle 109, indicia representative of zones of varying signal strength along the travel pathway, and indicia representative of visual observer indications, augmentation system indications, onboard sensor indications, and/or the like. As another example, the display 117A, 117B may include a GUI including a real-time monitored position of the vehicle 109, one or more vehicle statuses (e.g., speed, power level, component integrity, and/or the like), indicia indicative of vehicle controls, and/or the like. In still another example, the display 117B may include a visual observation request including a travel pathway of vehicle, one or more zones along the travel pathway, a position along the travel pathway at which a transition of vehicle operating modes may be initiated, a time at which the transition may be initiated, and/or the like.

In some embodiments, the zone-remote control system 103 and viewing entity 107 include one or more input devices 118A, 118B for receiving user inputs. For example, the input devices 118A, 118B may receive commands to control a vehicle 109. In another example, the input device 118A may receive user inputs that define a travel pathway for a vehicle 109 or exercise overriding control of a vehicle 109, such as while the vehicle 109 is configured to a visual observer mode. In still another example, an input device 118B may receive user inputs indicative of a viewing entity's availability data or an acceptance or rejection of a visual observation request. The input devices 118A, 118B may include any number of devices that enable human-machine interface (HMI) between a viewing entity 107 or an operator of a zone-remote control system 103 and a vehicle 109. In some embodiments, the input devices 118A, 118B include one or more buttons, cursor devices, joysticks, touch screens, including three-dimensional or pressure-based touch screens, camera, finger-print scanners, accelerometer, retinal scanner, gyroscope, magnetometer, or other input devices. In some embodiments, the input devices 118A, 118B includes one or more vehicle controls (e.g., joysticks, thumbsticks, yokes, steering wheels, accelerator control, thrust control, brake control, and/or the like) that enable a zone-remote control system 103 or viewing entity 107 to remotely control and navigate a vehicle 109.

In some embodiments, the vehicle 109 communicates with the zone-remote control system 103, viewing entity 107, and augmentation system 120 via one or more networks 118, any of which may further relay the received vehicle communications to the vehicle monitoring system 101. In some embodiments, the vehicle 109 includes one or more sensors 111 that generate readings respective to the vehicle 109 or environment surrounding the vehicle 109. In some embodiments, sensors 111 include position signal receiving circuits, accelerometers, ultrasonic sensors and/or or other distance sensors, optical sensors (e.g., cameras, infrared imaging devices, and/or the like), magnetometers, altimeters, speedometers, barometers, current sensors, tilt sensors, inertial measurement units, anemometers, and/or the like. In some embodiments, the vehicle 109 is configurable to various operational modes including a beyond visual line of sight (BVLOS) mode, a visual observer mode, and an onboard sensor mode. In some embodiments, in the BVLOS mode, the vehicle 109 is remotely navigated by a zone-remote control system 103. In some embodiments, in the visual observer mode, a viewing entity temporarily navigates the vehicle 109 using temporarily provisioned backup control privileges (e.g., the zone-remote control system 103 maintaining overriding control of the vehicle 109). In some embodiments, in the onboard sensor mode, the vehicle 109 navigates autonomously using one or more sensors 111, such as a camera, distance sensor, and/or the like.

In some embodiments, the augmentation system 120 provides positioning data to the vehicle 109, which may be used by the vehicle 109 to supplement or correct position signals received by the vehicle from satellite-based sources. In some embodiments, the augmentation system 120 supplements and/or enhances satellite-based positioning data. In some embodiments, positioning data provided by the augmentation system 120 is used to correct for clock drift, ephemeris, ionospheric delay, satellite unavailability, and/or the like. For example, the vehicle 109 may use positioning data from the augmentation system 120 to generate differential corrections for offsetting deficiencies in signal strength. As another example, the augmentation system 120 may relay positioning data from satellites to the vehicle 109 to overcome unavailability of satellite communication within a zone of a travel pathway. In some embodiments, the augmentation system 120 is located proximate to one or more zones of a travel pathway. Alternatively, in some embodiments, the augmentation system 120 is remote to the travel pathway.

In some embodiments, the vehicle monitoring system 101, zone-remote control system 103, remote computing environment 105, viewing entity 107, vehicle 109, and augmentation system 120 are communicable over one or more communications network(s), for example the communications network(s) 118. It should be appreciated that the communications network 118 in some embodiments is embodied in any of a myriad of network configurations. In some embodiments, the communications network 118 embodies a public network (e.g., the Internet). In some embodiments, the communications network 118 embodies a private network (e.g., an internal, localized, and/or closed-off network between particular devices). In some other embodiments, the communications network 118 embodies a hybrid network (e.g., a network enabling internal communications between particular connected devices and external communications with other devices). In some embodiments, the communications network 118 embodies a satellite-based communication network. Additionally, or alternatively, in some embodiments, the communications network 118 embodies a radio-based communication network that enables communication and control between a zone-remote control system 103 or viewing entity 107 and one or more vehicles 109. The communications network 118 in some embodiments may include one or more base station(s), relay(s), router(s), switch(es), cell tower(s), communications cable(s) and/or associated routing station(s), and/or the like. In some embodiments, the communications network 118 includes one or more user-controlled computing device(s) (e.g., a user owner router and/or modem) and/or one or more external utility devices (e.g., Internet service provider communication tower(s) and/or other device(s)).

Each of the components of the system communicatively coupled to transmit data to and/or receive data from one another over the same or different wireless or wired networks embodying the communications network 118. Such configuration(s) include, without limitation, a wired or wireless Personal Area Network (PAN), Local Area Network (LAN), Metropolitan Area Network (MAN), Wide Area Network (WAN), satellite network, radio network, and/or the like. Additionally, while FIG. 1 illustrate certain system entities as separate, standalone entities communicating over the communications network 118, the various embodiments are not limited to this particular architecture. In other embodiments, one or more computing entities share one or more components, hardware, and/or the like, or otherwise are embodied by a single computing device such that connection(s) between the computing entities are over the communications network 118 are altered and/or rendered unnecessary.

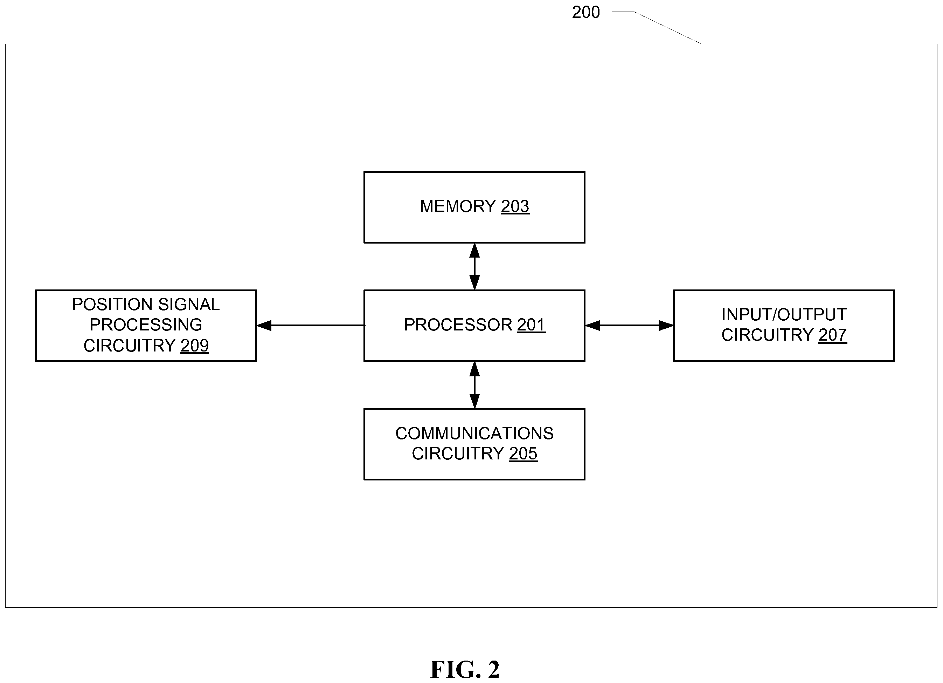

FIG. 2 illustrates a block diagram of an example apparatus 200 that may be specially configured in accordance with at least some example embodiments of the present disclosure. The apparatus 200 may carry out functionality and processes described herein to control navigation of a vehicle along a travel pathway based at least in part on strength of position signals along the travel pathway. In some embodiments, the apparatus 200 includes a processor 201, memory 203, communications circuitry 205, input/output circuitry 207, and travel pathway processing circuitry 209. In some embodiments, the apparatus 200 is configured, using one or more of the processor 201, memory 203, communications circuitry 205, input/output circuitry 207, and/or travel pathway processing circuitry 209, to execute and perform the operations described herein.

In general, the terms computing entity (or "entity" in reference other than to a user), device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, controlling, modifying, restoring, processing, displaying, storing, determining, creating/generating, monitoring, evaluating, comparing, and/or similar terms used herein interchangeably. In one embodiment, these functions, operations, and/or processes may be performed on data, content, information, and/or similar terms used herein interchangeably. In this regard, the apparatus 200 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally, or alternatively, in some embodiments, other elements of the apparatus 200 provide or supplement the functionality of another particular set of circuitry. For example, the processor 201 in some embodiments provides processing functionality to any of the sets of circuitry, the memory 203 provides storage functionality to any of the sets of circuitry, the communications circuitry 205 provides network interface functionality to any of the sets of circuitry, and/or the like.

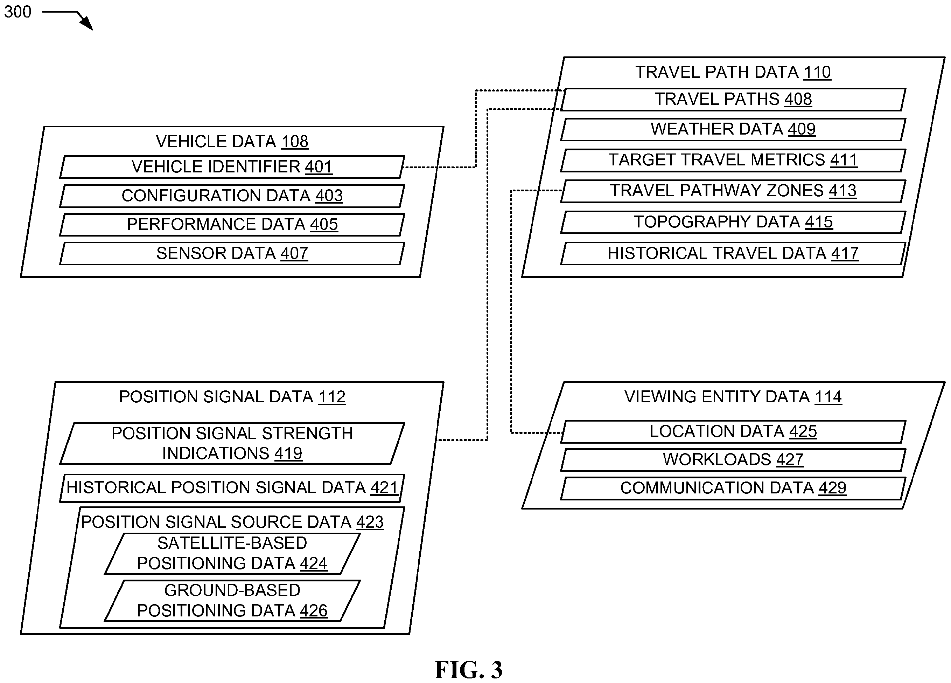

In some embodiments, the processor 201 (and/or co-processor or any other processing circuitry assisting or otherwise associated with the processor) is/are in communication with the memory 203 via a bus for passing information among components of the apparatus 200. In some embodiments, for example, the memory 203 is non-transitory and may include, for example, one or more volatile and/or non-volatile memories. In other words, for example, the memory 203 in some embodiments includes or embodies an electronic storage device (e.g., a computer readable storage medium). In some embodiments, the memory 203 is configured to store information, data, content, applications, instructions, or the like, for enabling the apparatus 200 to carry out various functions in accordance with example embodiments of the present disclosure (e.g., modification of travel pathways and operation modes of vehicles based at least in part on strength of position signals). In some embodiments, the memory 203 is embodied as, or communicates with, a data store 102 as shown in FIG. 1 and described herein. In some embodiments, the memory 203 includes vehicle data 108, travel pathway data 110, position signal data 112, viewing entity data 114, and/or the like, as further architected in FIG. 3 and described herein.

The processor 201 may be embodied in a number of different ways. For example, in some example embodiments, the processor 201 includes one or more processing devices configured to perform independently. Additionally, or alternatively, in some embodiments, the processor 201 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the apparatus 200, and/or one or more remote or "cloud" processor(s) external to the apparatus 200.

In an example embodiment, the processor 201 is configured to execute instructions stored in the memory 203 or otherwise accessible to the processor. Additionally, or alternatively, the processor 201 in some embodiments is configured to execute hard-coded functionality. As such, whether configured by hardware or software methods, or by a combination thereof, the processor 201 represents an entity (e.g., physically embodied in circuitry) capable of performing operations according to an embodiment of the present disclosure while configured accordingly. Additionally, or alternatively, as another example in some example embodiments, when the processor 201 is embodied as an executor of software instructions, the instructions specifically configure the processor 201 to perform the algorithms embodied in the specific operations described herein when such instructions are executed.

As one particular example embodiment, the processor 201 is configured to perform various operations associated with modifying travel pathways for an unmanned vehicle and configuring operational modes of the unmanned vehicle based at least in part on strength of position signals along the travel pathway. In some embodiments, the processor 201 includes hardware, software, firmware, and/or the like, that modify a travel pathway based at least in part on output from the travel pathway processing circuitry 209. For example, the processor 201 may modify a travel pathway to include a visual observer indication that indicates a position along a travel pathway at which a transition of a vehicle 109 from a BVLOS mode (or other operational mode) to a visual observer mode may be initiated. In some embodiments, the processor 201 includes hardware, software, firmware, and/or the like, that monitor a real-time position of a vehicle 109 and cause a transition of the vehicle 109 from a BVLOS mode to a visual observer mode in response to determining the vehicle 109 is proximate to a zone associated with poor signal strength. For example, the processor 201 may determine that the vehicle 109 is located at a position associated with a visual observer indication and, in response, cause establishment of a connection between the vehicle 109 and a viewing entity 107 to temporarily grant the viewing entity 107 backup control of the vehicle 109. In some embodiments, the processor 201 includes hardware, software, firmware, and/or the like, that determine availability of a viewing entity 107 to temporarily receive backup control of a vehicle 109 while the vehicle 109 is proximate to a zone associated with poor signal strength. For example, the processor 201 may determine whether availability data and/or a location of a viewing entity 107 indicates availability to exercise backup control of a vehicle 109 at a particular time interval and location. As another example, the processor 201 may determine whether a viewing entity 107 has accepted or rejected a visual observation request. In some embodiments, the processor 201 includes hardware, software, firmware, and/or the like, that determine whether an augmentation system 120 is available to provision positioning data to a vehicle 109 (e.g., based at least in part on a communication range, location, and/or configuration of the augmentation system 120 or vehicle 109).

In some embodiments, the apparatus 200 includes input/output circuitry 207 that provides output to a user (e.g., a viewing entity 107 or an operator of a control station 116) and, in some embodiments, to receive an indication of a user input. For example, in some contexts, the input/output circuitry 207 provides output to and receives input from one or more zone-remote control systems 103 or viewing entities 107. In some embodiments, the input/output circuitry 207 is in communication with the processor 201 to provide such functionality. The input/output circuitry 207 may comprise one or more user interface(s) and in some embodiments includes a display that comprises the interface(s) rendered as a web user interface, an application user interface, a user device, a backend system, or the like. In some embodiments, the input/output circuitry 207 also includes a keyboard, a mouse, a joystick, a touch screen, touch areas, soft keys a microphone, a speaker, and/or other input/output mechanisms. The processor 201 and/or input/output circuitry 207 comprising the processor may be configured to control one or more functions of one or more user interface elements through computer program instructions (e.g., software and/or firmware) stored on a memory accessible to the processor 201 (e.g., memory 203, data store 102, and/or the like). In some embodiments, the input/output circuitry 207 includes or utilizes a user-facing application to provide input/output functionality to a display of a control station 116, viewing entity 107, and/or other display associated with a user.

In some embodiments, the apparatus 200 includes communications circuitry 205. The communications circuitry 205 includes any means such as a device or circuitry embodied in either hardware or a combination of hardware and software that is configured to receive and/or transmit data from/to a network and/or any other device, circuitry, or module in communication with the apparatus 200. In this regard, in some embodiments the communications circuitry 205 includes, for example, a network interface for enabling communications with a wired or wireless communications network, such as the network 118 shown in FIG. 1 and described herein. Additionally, or alternatively in some embodiments, the communications circuitry 205 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 205 includes circuitry for interacting with the antenna(s) and/or other hardware or software to cause transmission of signals via the antenna(s) or to handle receipt of signals received via the antenna(s). In some embodiments, the communications circuitry 205 enables transmission to and/or receipt of data from data stores 102, zone-remote control systems 103, remote computing environments 105, viewing entities 107, vehicles 109, augmentation systems 120, and/or other external computing devices in communication with the apparatus 200.

The travel pathway processing circuitry 209 includes hardware, software, firmware, and/or a combination thereof, that processes a travel pathway, metadata, satellite-based positioning data, and/or the like. For example, in some contexts, the travel pathway processing circuitry 209 includes hardware, software, firmware, and/or the like, that receive a travel pathway from a zone-remote control system 103 and obtains satellite-based positioning data from a remote computing environment 105 based at least in part on the travel pathway. In some contexts, the travel pathway processing circuitry 209 includes hardware, software, firmware, and/or the like, that generate a plurality of signal strength indications along the travel pathway based at least in part on the satellite-based positioning data, generates a plurality of zones along the travel pathway based at least in part on the signal strength indications, and generates one or more visual observer indications based at least in part on the signal strength indications one of the plurality of zones that is associated with poor position signal. The travel pathway processing circuitry 209 may communicate with a data store 102, zone-remote control system 103, remote computing environment 105, viewing entity 107, and/or augmentation system 120 to obtain vehicle data 108, travel pathway data 110, position signal data 112, viewing entity data 114, and/or the like. In some embodiments, the travel pathway processing circuitry 209 includes hardware, software, firmware, and/or the like, that generate an estimated travel time for a vehicle 109 based at least in part on a modified travel pathway. In some embodiments, the travel pathway processing circuitry 209 includes hardware, software, firmware, and/or the like, that generate positions along a travel pathway at which a transition of the vehicle 109 between operational modes may be initiated. In some embodiments, the travel pathway processing circuitry 209 includes hardware, software, firmware, and/or the like, that generate travel pathway adjustments. For example, the travel pathway processing circuitry 209 may generate a travel pathway adjustment for revising a course of travel for a vehicle 109 such that the vehicle 109 circumvents a zone associated with more signal. As another example, the travel pathway processing circuitry 209 (potentially in combination with the processor 201) generates a travel pathway adjustment for modifying a vehicle speed and/or departure time of the vehicle 109 such that the vehicle 109 navigates through a zone outside of an unavailable period of a viewing entity 107. In some embodiments, the travel pathway processing circuitry 209 includes a separate processor, specially configured field programmable gate array (FPGA), and/or a specially programmed application specific integrated circuit (ASIC).

Additionally, or alternatively, in some embodiments, two or more of the processor 201, memory 203, communications circuitry 205, input/output circuitry 207, and/or travel pathway processing circuitry 209 are combinable. Additionally, or alternatively, in some embodiments, one or more of the sets of circuitry perform some or all of the functionality described associated with another component. For example, in some embodiments, two or more of the sets of circuitry 201-209 are combined into a single module embodied in hardware, software, firmware, and/or a combination thereof. Similarly, in some embodiments, one or more of the sets of circuitry, for example the input/output circuitry 207 and/or travel pathway processing circuitry 209 is/are combined with the processor 201, such that the processor 201 performs one or more of the operations described above with respect to each of these sets of circuitry 207-209f.

### Example Data Architectures and Workflows of the Disclosure

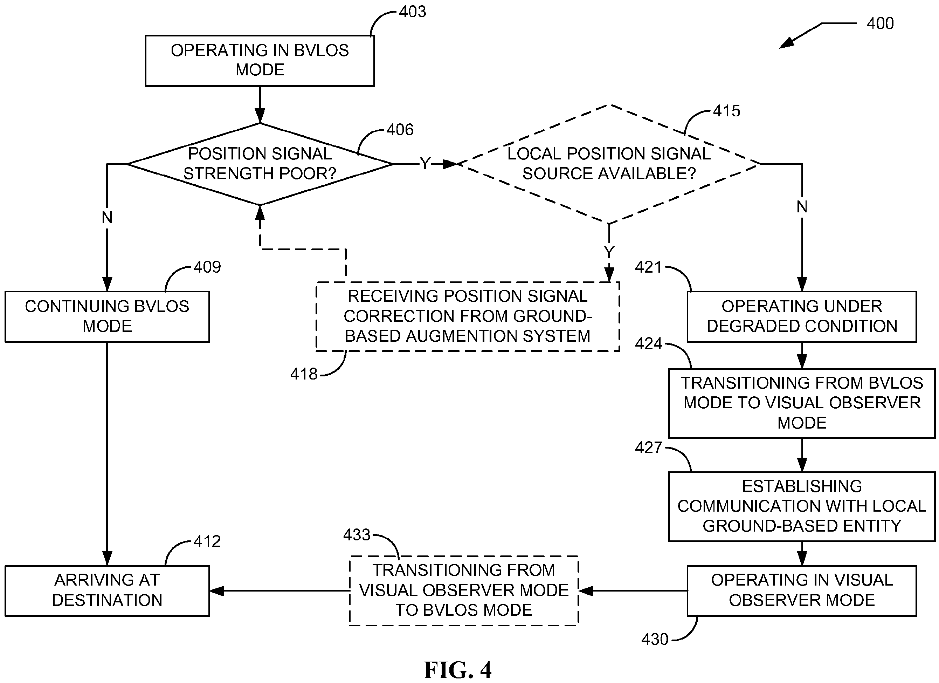

Having described example systems and apparatuses in accordance with embodiments of the present disclosure, example architectures of data and workflows in accordance with the present disclosure will now be discussed. In some embodiments, the systems and/or apparatuses described herein maintain data environment(s) that enable the workflows in accordance with the data architectures described herein. For example, in some embodiments, the systems and/or apparatuses described herein function in accordance with the data architectures depicted and described herein with respect to FIG. 3 and the workflows depicted and described herein with respect to FIGS. 4-6 are performed or maintained via the apparatus 200.

FIG. 3. illustrates an example data architecture 300 in accordance with at least some example embodiments of the present disclosure. In some embodiments, the vehicle data 108 includes one or more vehicle identifiers 301, configuration data 303, performance data 305, sensor data 307, and/or the like. In some embodiments, the vehicle identifier 301 includes any information by which a vehicle 109 may be identified including serial number, manufacturer number, model number, registration number, and/or the like. In some embodiments, the configuration data 303 includes any data associated with vehicle settings, vehicle controls, and/or the like, which may be used to establish communication with and control of the vehicle 109. For example, the configuration data 303 may include communication settings, security settings, and/or the like that may be used to establish a connection between the vehicle 109 and a zone-remote control system 103 or viewing entity 107. As another example, the configuration data 303 may include sensor settings that may be used to autonomously control the vehicle 109 when the vehicle 109 is configured to an onboard sensor mode. In still another example, the configuration data 303 may include communication settings that enable real-time monitoring of the location of the vehicle 109.

In some embodiments, the performance data 305 includes data associated with navigation and movement capabilities of the vehicle 109. In some embodiments, the performance data 305 includes a vehicle movement range, communication range, payload capacity, speed range, and/or the like. In some embodiments, the sensor data 307 includes data from one or more sensors 111 of a vehicle 109. For example, the sensor data 307 may include readings from a camera, ultrasonic sensor, inertial measurement unit, and/or the like. As another example, the sensor data 307 may include strengths of position signals received by the vehicle 109. In some embodiments, the vehicle monitoring system 101 receives vehicle data 108 from the vehicle 109, zone-remote control system 103, remote computing environment 105, viewing entity 107, and/or the like.

In some embodiments, the travel pathway data 110 includes one or more travel pathways 308 and metadata including environmental data 309, target travel metrics 311, travel pathway zones 313, topography data 315, historical travel data 317, and/or the like. In some embodiments, the travel pathway 308 includes an origin, a destination, and a course of travel between the origin and the destination. In some embodiments, the travel pathway data 110 includes association between the travel pathway data 110 and one or more of vehicle data 108, position signal data 112, and viewing entity data 114. For example, the travel pathway data 110 may include an association between a travel pathway 308 and a vehicle identifier 301. As another example, the travel pathway data 110 may include an association between the travel pathway 308 and position signal data 112. In still another example, the travel pathway data 110 may include an association between one or more travel pathway zones 313 and viewing entity data 114, such as location data 326 for one or more viewing entities 107.

In some embodiments, the environmental data 309 includes atmospheric conditions along the travel pathway 308 including weather conditions, temperatures, pressures, solar activity, and/or the like, which may impact vehicle movement and availability or strength of position signals. In some embodiments, the target travel metrics 311 include a desired travel date, departure time, arrival time, vehicle speed, and/or the like. In some embodiments, the target travel metrics 311 indicate whether a travel pathway 308 may be adjusted temporally or geographically. For example, the target travel metrics 311 may indicate that a course of travel indicated by the travel pathway 308 cannot be adjusted, such as to direct a vehicle 109 around a zone associated with poor position signal. As another example, the target travel metrics 311 may indicate that a travel time or departure data of the vehicle 109 may adjusted such that the vehicle 109 passes through a zone during a time interval in which a viewing entity 107 proximate to the zone is available to exercise backup control of the vehicle 109.

In some embodiments, the travel pathway zones 313 include areas along a travel pathway 308. In some embodiments, the travel pathway zones 313 include predefined thresholds for signal strength, geographic area, and/or the like, that may be used in generating travel pathway zones. For example, the travel pathway zones 313 may include a threshold signal strength value or range for determining whether a value of signal strength is poor or nominal. As another example, the travel pathway zones 313 may include a threshold distance value or range that may be used to partition the travel pathway 308 into a plurality of zones. In some embodiments, the travel pathway zones 313 include visual observer indications, augmentation system indications, onboard sensor indications, and/or the like. For example, a travel pathway zone 313 may include a visual observer indication including a position along a travel pathway 308 at which a transition of the vehicle 109 from the BVLOS mode to the visual observer mode may be initiated. In some embodiments, the topography data 315 includes data indicative of topographical features, infrastructure, and/or the like in one or more geographical areas. For example, the topography data 315 may include a topographical map file indicative of geological features and ground infrastructure in a geographical area that comprises one or more portions of a travel pathway 308. As another example, the topography data 315 may indicate geographical locations at which a viewing entity 107 may be positioned to enable the viewing entity 107 to maintain a continuous line of sight to a vehicle 109 while exercising backup control of the vehicle 109.

In some embodiments, the historical travel data 317 includes historical data associated with one or more travel pathways 308, which may be used by the vehicle monitoring system 101 as an input to processes for analyzing and modifying a travel pathway 308. For example, the historical travel data 317 may include a modified travel pathway previously generated by the vehicle monitoring system 101 and based upon which additional travel pathway modifications may be generated. In another example, the historical travel data 317 may include one or more geographical areas historically associated with poor or unavailable position signal. In still another example, the historical travel data 317 may include historical travel metrics for a travel pathway 308, such as actual travel time, arrival time, and/or the like. In some embodiments, the historical travel data 317 includes geographical locations of one or more augmentation systems 120. For example, the historical travel data 317 may indicate a location of an augmentation system 120 with which a vehicle 109 may communicate during movement of the vehicle 109 along a portion of a travel pathway 308.

In some embodiments, the position signal data 112 includes signal strength indications 319, historical position signal data 321, position signal source data 323, and/or the like. In some embodiments, a signal strength indication 319 indicates a value or category of signal strength for a portion of a travel pathway 308. For example, the signal strength indication 319 may indicate that a geographic region comprising a portion of a travel pathway 308 is associated with a poor or nominal level of signal strength. As another example, the signal strength indication 319 may indicate an explicit value of signal strength for a geographical area, such as a decibel (dB) power level. In some embodiments, the signal strength indications 319 include sets of signal strength indications for a particular geographical area at various dates, time intervals, and/or the like. In some embodiments, the signal strength indications 319 include sets of signal strength indications for a particular geographical area under various environmental conditions, such as various weather conditions, solar activity levels, and/or the like.

In some embodiments, the historical position signal data 321 includes historical values or categories of signal strength for one or more geographical areas, travel pathway zones 313, and/or the like. In some embodiments, the historical position signal data 321 includes historical signal strength indications for a travel pathway 308. In some embodiments, the historical position signal data 321 includes historical positioning data, which may have been previously received by the vehicle monitoring system 101 from a remote computing environment 105, zone-remote control system 103, or vehicle 109. In some embodiments, the position signal source data 323 includes data that identifies one or more sources of positioning data, such as satellites, remote computing environments 105, augmentation systems 120, and/or the like. In some embodiments, the position signal source data 323 includes locations and/or communication ranges of positioning data sources. For example, the position signal source data 323 may include a location and/or communication range of an augmentation system 120.

In some embodiments, the position signal source data 323 includes satellite-based positioning data 324, augmentation system-based positioning data 325, and/or the like. In some embodiments, the satellite-based positioning data 324 includes data objects indicative of position signals that are generated by an artificial satellite. The vehicle monitoring system 101 may receive the satellite-based positioning data 324 directly from the satellite-based source or from a remote computing environment 105. In some embodiments, the augmentation system-based positioning data 325 is generated by and received from an augmentation system 120. In some embodiments, the augmentation system-based positioning data 325 includes data objects that may be used by the vehicle 109 to correct for clock drift, ephemeris, ionospheric delay, satellite unavailability, and/or the like. For example, the augmentation system-based positioning data 325 may include position differential corrections for offsetting deficiencies in signal strength.

In some embodiments, the viewing entity data 114 includes location data 326, availability data 327, communication data 329, and/or the like. In some embodiments the location data 326 includes geographical areas associated with one or more viewing entities 107. For example, the location data 326 may include one or more geographical areas and/or ranges thereof within which a viewing entity 107 operates. In some embodiments, the availability data 327 includes data indicative of availability of a viewing entity 107 to monitor and exercise backup control of a vehicle 109. For example, the availability data 327 may indicate travel pathways 308 associated with the viewing entity 107, including a travel date and an indication of an expected interval within which the viewing entity 107 will exercise backup control of an associated vehicle 109. As another example, the availability data 327 may indicate one or more time periods during which the viewing entity 107 is available or unavailable to monitor and navigate a vehicle 109 through a zone associated with poor signal strength. In some embodiments, the communication data 329 includes data that identifies a viewing entity 107 and may be used to enable communication with the viewing entity 107. For example, the communication data 329 may include a network address, telecommunication identifier, and/or the like, by which a connection between the vehicle 109 and viewing entity 107 may be established to enable outputting of vehicle data 108 to the viewing entity 107 and granting of backup control of the vehicle 109.

FIG. 4 illustrates a diagram of example workflow 400 for controlling vehicle navigation based at least in part on strength of position signals. In some embodiments, the workflow 400 is performed by the vehicle monitoring system 101 embodied as the apparatus 200 shown in FIG. 2 and described herein. In various embodiments, the apparatus 200 performs the workflow 400 to estimate position signal error along a travel pathway of a vehicle 109 and determine whether to initiate a transition of the vehicle 109 from a beyond visual line of sight (BVLOS) mode to a visual observer mode, or perform other actions such as causing the vehicle 109 to obtain positioning data from an augmentation system to correct for degraded or unavailable position signals along the travel pathway. Alternatively, or additionally, in some embodiments one or more operations of the workflow 400 are performed by a zone-remote control system 103.

For example, in an aerial vehicle context, vehicle avionics may strongly rely on GPS signals to determine the current position of the vehicle 109 and report the current position to a zone-remote control system that controls and monitors the vehicle 109. As the vehicle 109 progresses along the travel pathway, the strength of GPS signals may be negatively impacted by GPS masking (e.g., buildings, terrain, large objects, and/or the like may mask GPS signals) and/or multipath effects (e.g., GPS signals may reflect off buildings, terrain or large objects causing timing delays which result in GPS position loss or degradation). The reduction of GPS signal strength and/or unavailability of GPS signals may lead to the vehicle 109 deviating from the intended travel pathway. In such scenarios, the apparatus 200 may perform the workflow 400 to analyze the travel pathway of the vehicle 109 and identify portions of the travel pathway in which GPS signals are degraded or unavailable. The apparatus 200 may further perform the workflow 400 to modify the travel pathway and/or operation of the vehicle 109 to accommodate for degraded or unavailable position signal along portions of the travel pathway.

In some embodiments, the workflow 400 includes the vehicle 109 operating in a beyond visual line of sight (BVLOS) mode (indicium 403). For example, the zone-remote control system 103 may control and monitor the vehicle 109 via a network connection. The zone-remote control system 103 may receive vehicle data 108, position signal data 112, and/or the like from the vehicle 109 and provide the data to the apparatus 200. Alternatively, or additionally, the apparatus 200 may receive vehicle data 108, position signal data 112, and/or the like from the vehicle 109. In some embodiments, the zone-remote control system 103 and/or apparatus 200 monitor one or more statuses of the vehicle 109 (e.g., location, performance, safety, and/or the like) based at least in part on the vehicle data 108 and position signal data 112, and further based at least in part on travel pathway data 110 associated with the vehicle 109.

In some embodiments, the workflow 400 includes (indicium 406) the apparatus 200 determining whether the signal strength associated with position signals currently received by the vehicle 109 is poor. Alternatively, in some embodiments, the apparatus 200 receives an indication from the vehicle 109, a zone-remote control system 103, or a remote computing environment 105 that indicates poor signal strength and/or position signal unavailability. For example, the apparatus 200 may continuously receive and monitor vehicle data 108 and/or position signal data 112 to determine signal strength of position signals currently being received by the vehicle 109. As another example, the apparatus 200 may receive from a remote computing environment 105 satellite-based positioning data by which the apparatus 200 generates signal strength indications. Alternatively, the vehicle 109 or a zone-remote control system 103 may determine signal strength is poor and report the poor signal strength to the apparatus 200. In some embodiments, the apparatus 200 compares the signal strength of position signals received by the vehicle 109 to one or more predefined thresholds to determine whether the signal strength is poor.

In some embodiments, in response to the apparatus 200 determining that signal strength is not poor (e.g., position signal strength is nominal, adequate, and/or the like), the workflow 400 includes the vehicle 109 continuing to operate in BVLOS mode (indicium 409) and arriving at a destination specified by the travel pathway associated with the vehicle (indicium 412). Alternatively, in some embodiments, in response to the apparatus 200 determining that signal strength is not poor, the workflow 400 may include the apparatus 200 continuously monitoring strength of position signals received by the vehicle 109 throughout navigation along the travel pathway, where any determination of poor signal strength thereafter may result in the workflow 400 proceeding to one or more of the operations marked by indicia 415-433.

In some embodiments, in response to the apparatus 200 determining that the signal strength is poor, the workflow 400 includes the apparatus 200 determining whether an augmentation system 120 is available to communicate with the vehicle 109 (indicium 415). Alternatively, in some embodiments, the apparatus 200 receives from the vehicle 109 an indication of poor signal strength (or of position signal unavailability), which may cause the apparatus 200 to automatically determine whether an augmentation system 120 is available. In some embodiments, the apparatus 200 determines whether an augmentation system 120 is located within a predetermined proximity of the vehicle 109, where the predetermined proximity may correspond to a maximum range of communication means for conducting communication between the vehicle 109 and the augmentation system 120. For example, the apparatus 200 may obtain a current position of the vehicle 109 and determine whether a Wide Area Augmentation System (WAAS) station is available to communicate with the vehicle 109. Alternatively, in some embodiments, the apparatus 200 or zone-remote control system 103 causes the vehicle 109 to attempt communication with one or more augmentation systems 120. In some contexts, the apparatus 200 may receive from the vehicle 109 or zone-remote control system 103 an indication of whether an attempt to establish communication between the vehicle 109 and augmentation system 120 is successful, which may result in the apparatus 200 confirming availability of the augmentation system 120. In some embodiments, in response to the apparatus 200 determining that an augmentation system 120 is not available to communicate with the vehicle 109, the workflow 400 includes the apparatus 200 determining that the vehicle 109 is operating under degraded condition (indicium 421).

In some embodiments, in response to the apparatus 200 determining that an augmentation system 120 is available, the workflow 400 includes the vehicle 109 receiving positioning data from the augmentation system 120 (indicium 418). In some embodiments, the positioning data from the augmentation system 120 includes position correction data that enables the vehicle 109 (or zone-remote control system 103 in control thereof) to compensate for position signal errors, such as clock drift, ionospheric delay, and/or the like. In some embodiments, the positioning data includes one or more position differential corrections for mitigating deficiencies in signal strength. In some embodiments, the positioning data includes relayed satellite-based positioning data obtained by the augmentation system 120 from one or more satellite-based positioning systems. In some embodiments, following or during receipt of the positioning data from the augmentation system 120, the workflow 400 includes the apparatus 200 determining whether the poor signal strength is sufficiently compensated such that movement of the vehicle 109 may be accurately monitored. In response to the apparatus 200 determining that the poor signal strength is sufficiently mitigated by the augmentation system 120, the workflow 400 may include the vehicle 109 continuing to operate in the BVLOS mode and arriving to the destination (indicia 409-412). In response to the apparatus 200 determining that the poor signal strength is not sufficiently mitigated by the augmentation system 120, the workflow 400 may include the apparatus 200 determining whether an additional augmentation system 120 is available (indicium 415) or that the vehicle 109 is operating under degraded condition (indicia 421).

In some embodiments, in response to the apparatus 200 determining that the vehicle 109 is operating under degraded condition, the workflow 400 includes the apparatus 200 initiating a transition of the vehicle 109 from the BVLOS mode to a visual observer mode (indicium 424). In some embodiments, the workflow 400 includes the apparatus 200 establishing communication with a viewing entity 107 that is proximate to a current location of the vehicle 109 (indicium 427). In some embodiments, the apparatus 200 provides a request for a current location to a plurality of viewing entities 107. In some embodiments, the apparatus 200 receives respective current locations from the viewing entities 107. Additionally, or alternatively, in some embodiments, the apparatus 200 queries one or more datasets comprising pre-established locations of viewing entities 107. In some embodiments, the apparatus 200 compares the current locations of the viewing entities 107 to a current location of the vehicle 109. In some contexts, based on the comparisons, the apparatus 200 may determine a viewing entity 107 that is located closest to the current location of the vehicle 109 and/or is within a predefined threshold range of the current location of the vehicle 109. The apparatus 200 may determine whether the viewing entity 107 is available to receive backup control of the vehicle 109 such that the viewing entity 107 may navigate the vehicle 109 to the desired destination or otherwise along the travel pathway.

In some embodiments, to initiate the transition to the visual observer mode, the apparatus 200 establishes a connection between the vehicle 109 and a viewing entity 107, where the connection enables backup control of the vehicle by the viewing entity 107. For example, in response to the apparatus 200 determining that the viewing entity 107 is available, the apparatus 200 causes establishment of a connection between the viewing entity 107 and the vehicle 109 such that backup control and vehicle monitoring capabilities are provisioned to the viewing entity 107. In some embodiments, the apparatus 200 causes the vehicle 109 to communicate with the viewing entity 107. For example, the apparatus 200 causes reconfiguration of the vehicle 109 such that the vehicle 109 provides vehicle data 108, position signal data 112, and/or the like to the viewing entity 107 to enable real-time monitoring and backup control of the vehicle 109. In some embodiments, the apparatus 200 causes provision of travel pathway data 110 to the viewing entity 107 such that the viewing entity 107 may be presented with a desired travel pathway for the vehicle 109 and metadata, such as a desired travel time, vehicle speed, vehicle acceleration, weather conditions, ground topography mappings, vehicle traffic information, and/or the like. In some embodiments, while the vehicle 109 is configured to the visual observer mode, the apparatus 200 maintains a connection between the vehicle 109 and the zone-remote control system 103 to continue outputting of vehicle data 108, position signal data 112, and/or the like to the zone-remote control system 103 and preserve override of control of the vehicle 109 by the zone-remote control system 103.

In some embodiments, the workflow 400 includes the vehicle 109 operating in the visual observer mode (indicium 430). In some embodiments, the viewing entity 107 navigates the vehicle 109 using backup control privileges until the vehicle 109 receives position signal of nominal signal strength, moves beyond a predetermined proximity of a zone associated with poor signal strength, or arrives at the destination associated with the travel pathway (e.g., at which point the apparatus 200 may initiate a transition of the vehicle 109 to the BVLOS mode). In some embodiments, the workflow 400 optionally includes the apparatus 200 initiating a transition of the vehicle from the visual observer mode to the BVLOS mode (indicium 433). In some embodiments, the apparatus 200 automatically initiates a transition of the vehicle 109 from the visual observer mode to the BVLOS mode in response to determining that the vehicle 109 has moved beyond a predetermined proximity of the portion of the travel pathway associated with poor signal strength. In some embodiments, the apparatus 200 automatically initiates a transition of the vehicle to the BVLOS mode in response to determining the vehicle 109 is receiving position signals of at least a threshold signal strength for a predetermined time period (e.g., 10 seconds, 30 seconds, 1 minute, or another suitable time period). In transitioning the vehicle 109 from the visual observer mode to the BVLOS mode, the apparatus 200 may disable the backup control of the vehicle by the viewing entity 107, such as by disabling the connection between the viewing entity 107 and the vehicle 109 while continuously maintaining the connection between the vehicle 109 and the zone-remote control system 103.

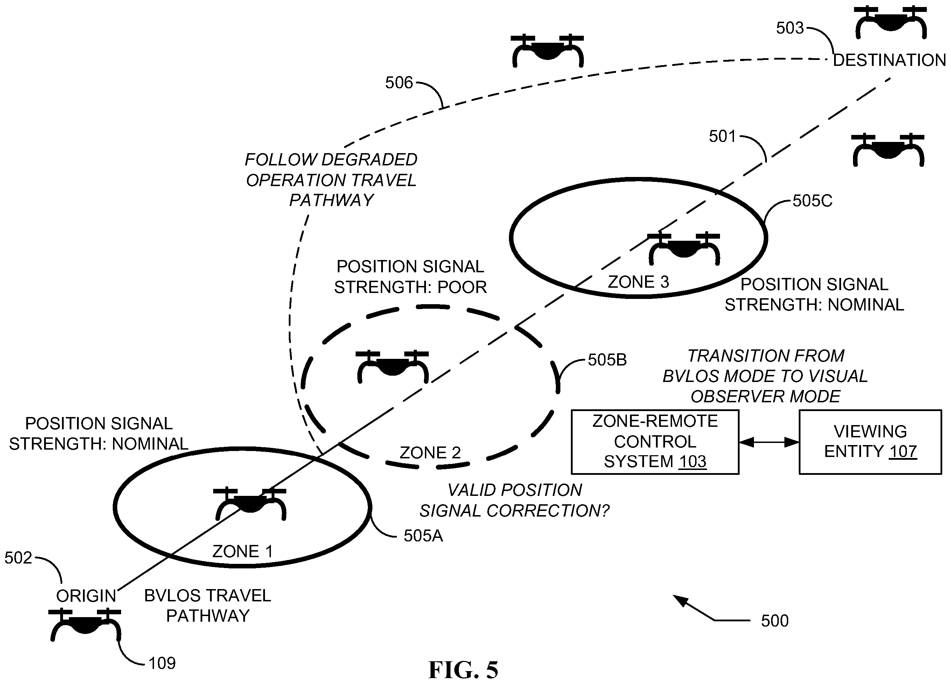

FIG. 5 illustrates an example vehicle environment 500 in which vehicle navigation may be controlled based at least in part on strength of position signals. In some embodiments, the vehicle environment 500 includes a vehicle 109 and a travel pathway 501 that defines a desired course of travel for the vehicle 109 between an origin 502 and a destination 503. In some embodiments, the travel pathway 501 indicates a desired course of travel for the vehicle 109 while the vehicle 109 is configured to a beyond visual line of sight (BVLOS) mode in which the vehicle is monitored and controlled by a zone-remote control system 103.

In some contexts, a vehicle monitoring system (FIG. 1) may partition the travel pathway 501 into a plurality of zones 1, 2, 3 based at least in part on indications of position signal strength along the travel pathway 501, where zones 1 and 3 are associated with nominal signal strength and zone 2 is associated with poor signal strength. In some embodiments, the vehicle monitoring system generates a position 504 along the travel pathway 501 at which navigation and/or control of the vehicle 109 may be modified to compensate for poor strength of position signals in zone 2. For example, the position 504 may be a region of the travel pathway 501 that precedes zone 2 and defines a predetermined proximity to zone 2.

In some embodiments, the vehicle monitoring system generates a visual observer indication such that the position 504 defines a portion of the travel pathway 501 at which a transition of the vehicle 109 from the BVLOS mode to a visual observer mode may be initiated. For example, in response to the vehicle 109 moving to the position 504, the vehicle monitoring system may determine the vehicle 109 is within a predetermined proximity of zone 2. In response to determining the vehicle is within the predetermined proximity of zone 2, the vehicle monitoring system may initiate a transition of the vehicle 109 from the BVLOS mode to a visual observer mode. In some embodiments, in the visual observer mode, the vehicle monitoring system causes establishment of a connection is established between the vehicle 109 and a viewing entity 107 located within zone 2. In some embodiments, via the connection, the viewing entity 107 monitors and exercises backup control of the vehicle 109 to navigate the vehicle 109 through zone 2. In some embodiments, while the vehicle 109 is configured to the visual observer mode, a prior connection between the vehicle 109 and the zone-remote control system 103 is maintained to grant the zone-remote control system 103 an override of vehicle control and preserve vehicle monitoring capabilities.

Alternatively, the vehicle monitoring system may generate an augmentation system indication in response to determining that no viewing entity 107 is available within zone 2. In such context of viewing entity unavailability, the position 504 may define a portion of the travel pathway 501 at which the vehicle 109 may communicate with an augmentation system to compensate for poor strength of position signal within zone 2. As another alternative, the vehicle monitoring system may generate a travel pathway adjustment in response to determining that no viewing entities or augmentation systems are available within zone 2. In such context of viewing entity and augmentation system unavailability, the position 504 may define a portion of the travel pathway 501 at which the zone-remote control system deviates navigation of the vehicle 109 deviates from the original travel pathway 501 to a degraded operation travel pathway 506 that circumvents zone 2 (e.g., where the travel pathway adjustment may define the degraded operation travel pathway 506).

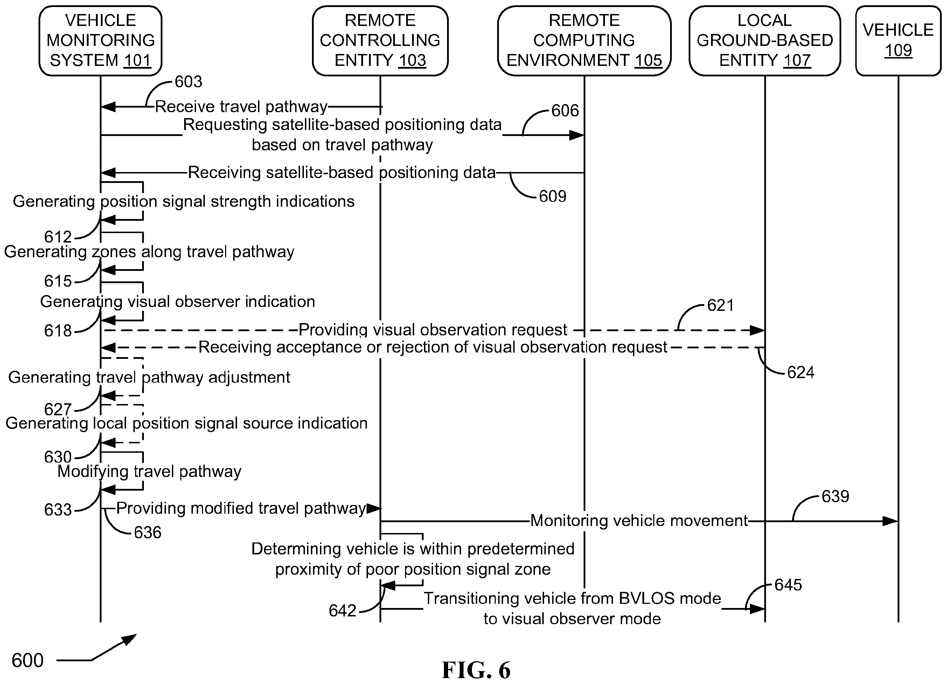

FIG. 6 illustrates a functional band diagram depicting operations of an example workflow 600 for controlling vehicle navigation based at least in part on strength of position signals. Specifically, FIG. 6 depicts a functional band diagram of an example workflow 600 for modifying a travel pathway of a vehicle 109 based at least in part on one or more indications of signal strength along the travel pathway. In some embodiments, the workflow 600 is embodied by computer program code stored on a non-transitory computer-readable storage medium of a computer program product configured for execution to perform the process as depicted and described. Additionally, or alternatively, in some embodiments, the workflow 600 is performed by one or more specially configured computing devices, such as the apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the workflow 600 includes the apparatus 200 receiving a travel pathway (indicium 603). In some embodiments, the apparatus 200 receives a travel pathway from a zone-remote control system 103. For example, in an aerial vehicle context, the apparatus 200 receives a flight path including a desired course of air travel between an origin and a destination. In some embodiments, the apparatus 200 receives metadata associated with the travel pathway including a travel date, origin identifier, destination identifier, desired travel time, desired arrival time, desired departure time, one or more weather conditions, ground infrastructure and/or topography mappings, one or more augmentation system identifiers, one or more zone-remote control system identifiers, and/or the like. In some embodiments, the metadata includes vehicle data for a vehicle 109 associated with the travel pathway. For example, the metadata may include a vehicle identifier, configuration data for controlling and monitoring the vehicle, performance data indicative of vehicle movement capabilities and/or onboard sensors, payload data, and/or the like.

In some embodiments, the workflow 600 includes the apparatus 200 requesting satellite-based positioning data from a remote computing environment 105 (indicium 606). In some embodiments, the apparatus 200 provisions to the remote computing environment 105 a request indictive of or including the travel pathway. In some embodiments, via the request, the apparatus 200 causes the remote computing environment 105 to generate or otherwise obtain satellite-based positioning data associated with geographical areas along the travel pathway. For example, in an aerial vehicle context, the apparatus 200 may provision a request to the remote computing environment 105 including a flight path for an unmanned aerial vehicle (UAV) and a time interval corresponding to an expected travel time for the UAV. The request may cause the remote computing environment 105 to automatically generate satellite-based positioning data indicative of GPS signal strength along the flight path during the time interval. In some embodiments, the satellite-based positioning data is further based upon a particular time interval, such as a period comprising a desired arrival time, departure time, travel time, and/or the like. In some embodiments, the request includes one or more alternative travel pathways or travel pathway adjustments such that the remote computing environment 105 obtains satellite-based positioning data for a primary course of vehicle travel and one or more alternative courses of travel.

In some embodiments, the workflow 600 includes the apparatus 200 receiving satellite-based positioning data from the remote computing environment 105 (indicium 609). For example, the apparatus 200 may receive from the remote computing environment 105 GPS data indicative of GPS signal strength along a travel pathway. In some embodiments, the apparatus 200 receives satellite-based positioning data for the travel pathway at a plurality of time intervals. For example, the apparatus 200 may receive satellite-based positioning data for a travel pathway at a first time period comprising a desired vehicle departure time and additional satellite-based positioning data for a secondary time period comprising an alternative vehicle departure time. In some embodiments, the apparatus 200 receives satellite-based positioning data associated with various atmospheric conditions that may impact signal strength. For example, the apparatus 200 may receive multiple sets of satellite-based positioning data for the same travel pathway under various conditions for pressure, temperature, air humidity, solar activity, precipitation, and/or the like.

In some embodiments, the workflow 600 includes the apparatus 200 generating a plurality of signal strength indications for the travel pathway based at least in part on the travel pathway and the satellite-based positioning data (indicium 612). For example, the apparatus 200 may receive GPS data for a travel pathway from the remote computing environment 105. The apparatus 200 may generate indications of GPS signal strength along the travel pathway based at least in part on the GPS data. In some embodiments, the apparatus 200 generates multiple sets of signal strength indications for the travel pathway that correspond to various conditions, such as varying time intervals, weather or other atmospheric conditions, and/or the like. In some embodiments, the apparatus 200 generates signal strength indications for predefined distances along the travel pathway (e.g., every 2 miles, 5 miles, 50 miles, or any suitable measure of distance). In some embodiments, based at least in part on the satellite-based positioning data, the apparatus 200 generates values of signal strength along the travel pathway. In some embodiments, the apparatus 200 associate respective portions of the travel pathway with one of a plurality of signal strength categories. For example, the apparatus 200 may generate a value of signal strength for a portion of a travel pathway, compare the value to one or more predetermined threshold ranges of signal strength, and associate the portion with a corresponding signal strength category based at least in part on the threshold range that comprises the value of signal strength. In some embodiments, a first signal strength category is associated with poor levels of signal strength and/or signal unavailability, and a second signal strength category is associated with nominal or adequate levels of signal strength.

In some embodiments, the workflow 600 includes the apparatus 200 generating, based least in part of the plurality strength indications, a plurality of zones along the travel pathway including one or more zones associated with poor signal strength (indicium 615). In some embodiments, the apparatus 200 generates the plurality of zones based at least in part on determining neighboring portions along the pathway that demonstrate similar indications for signal strength. For example, the apparatus 200 may determine a continuous segment of the travel pathway that is associated with values of signal strength within a predetermined range or standard deviation of signal strength values for preceding portions of the travel pathway. In some embodiments, the apparatus 200 generates the plurality of zones by determining continuous segments of the travel pathway that are associated with similar values of signal strength. For example, the apparatus 200 may generate a first zone comprising a first continuous portion of the travel pathway associated with poor signal strength, a second zone comprising a second continuous portion of the travel pathway associated with nominal signal strength, and a third zone comprising a third continuous portion of the travel pathway associated with poor signal strength. The second continuous portion may extend from an end of the first continuous portion, and the third continuous portion may extend from an end of the second continuous portion. In some embodiments, the apparatus 200 generates multiple sets of zones that correspond to signal strength indications for the travel pathway under various conditions, such as varying time intervals, atmospheric conditions, vehicle operating speeds, and/or the like.

In some embodiments, the workflow 600 includes the apparatus 200 generating one or more visual observer indications based at least in part on the plurality of signal strength indications and the plurality of zones (indicium 618). For example, the apparatus 200 may generate a visual observer indication for each zone that is associated with poor signal strength. In some embodiments, the visual observer indication indicates a position along the travel pathway at which a transition of the vehicle from a beyond visual line of sight (BVLOS) mode to a visual observer mode is initiated. In some embodiments, the visual observer mode enables backup control of the vehicle by a viewing entity 107 while the vehicle is within a predetermined proximity of the corresponding zone. In some embodiments, the apparatus 200 generates the visual observer indication based at least in part on availability data associated with the viewing entity 107. In some embodiments, the apparatus 200 determines one or more viewing entities 107 that are located in the zone associated with poor signal strength based at least in part on viewing entity data 114. For example, the apparatus 200 may identify a viewing entity 107 located within the zone based at least in part on location data 326 that indicates a location and/or operating range of the viewing entity 107. In some embodiments, the apparatus 200 determines whether the viewing entity 107 is available to receive backup control of the vehicle 109 based at least in part on availability data 327 of the viewing entity 107. For example, the apparatus 200 may determine a time interval at which the vehicle 109 is expected to move within a predetermined proximity of the zone associated with poor signal strength. The apparatus 200 may compare the time interval to availability data 327 of the viewing entity 107 to determine whether the viewing entity 107 is available to monitor and navigate the vehicle 109 through the zone during the time interval. In some embodiments, the apparatus 200 generates the visual observer indication based at least in part on a real-time monitored position of the vehicle 109 along the travel pathway. For example, the apparatus 200 may generate an estimated time interval at which the vehicle 109 is expected to move within a predetermined proximity of the zone associated with poor signal strength based at least in part on the current position of the vehicle 109 along the travel pathway. The apparatus 200 may generate a visual observer indication for the zone associated with poor signal strength based at least in part on the estimated time interval, which may improve the efficiency and accuracy of utilizing viewing entities along the travel pathway.

In some embodiments, the workflow 600 optionally includes the apparatus 200 generating a visual observation request and causing provision of the visual observation request to the viewing entity 107 (indicium 621). In some embodiments, the visual observation request includes vehicle data 108 associated with the vehicle 109 (e.g., vehicle identifier, operating parameters, and/or the like), travel pathway data 110 (e.g., identification of the zone associated with poor signal, a desired travel time, vehicle speed, arrival time, and/or the like), position signal data 112, and/or the like.

In some embodiments, the workflow 600 optionally includes the apparatus 200 receiving availability data from the viewing entity 107 (indicium 624). In some embodiments, the apparatus 200 determines the availability of the viewing entity 107 based at least in part on the availability data. In some embodiments, based at least in part on the availability data, travel pathway, metadata, and/or the like, the apparatus 200 determines that the viewing entity 107 is available to receive and exercise backup control of the vehicle 109 at a time interval during which the vehicle 109 is expected to move within a predetermined proximity of the zone associated with poor signal strength. Alternatively, in some embodiments, the workflow 600 optionally includes the apparatus 200 receiving an acceptance or rejection of the visual observation request, where an acceptance of the visual observation request indicates the viewing entity 107 is available to receive and exercise backup control of the vehicle 109 while the vehicle 109 is configured to the visual observer mode (e.g., upon the vehicle 109 moving within predetermined proximity of the zone associated with poor signal strength).

In some embodiments, based at least in part on the availability data or receiving a rejection of the visual observation request, the apparatus 200 determines that no viewing entity is available to exercise backup control of the vehicle 109 while the vehicle 109 is within a predetermined proximity of the zone associated with poor signal strength. In some embodiments, in response to determining that a first viewing entity 107 is unavailable to exercise backup control of the vehicle 109, the apparatus 200 determines whether an alternative viewing entity 107 is available, such as by provisioning additional visual observation requests and/or identifying additional viewing entities 107 located within the zone associated with poor signal strength.

In some embodiments, the workflow 600 optionally includes the apparatus 200 generating an augmentation system indication (indicium 627). For example, in response to determining that no viewing entity is available to exercise the backup control of the vehicle 109 while the vehicle 109 is within a predetermined proximity of the zone associated with poor signal strength, the apparatus 200 may generate an augmentation system indication. In some embodiments, the apparatus 200 determines whether an augmentation system 120 is located within or proximate to the zone associated with poor signal strength. For example, the apparatus 200 may determine whether a differential global positioning system (DGPS) is located within a communication range of the vehicle 109 when the vehicle 109 is positioned proximate to the zone associated with poor signal strength. In some embodiments, the augmentation system indication indicates a position along the travel pathway at which a connection between the vehicle 109 and an augmentation system 120 may be established to enable the vehicle 109 to receive positioning data from the augmentation system 120. The vehicle 109 may use the positioning data from the augmentation system 120 to supplement satellite-based positioning data and/or offset deficiencies in position signals received from satellites.

In some embodiments, the workflow 600 includes the apparatus 200 modifying the travel pathway (indicium 630). In some embodiments, the apparatus 200 modifies the travel pathway to include one or more visual observer indications, one or more augmentation system indications, one or more travel pathway adjustments, one or more onboard sensor indications, and/or the like. For example, in an aerial context, the apparatus 200 modifies a flight plan to include a visual observer indication that indicates a position along a flight path at which a transition of an unmanned aerial vehicle (UAV) from a BVLOS mode to a visual observer mode is initiated. The apparatus 200 may modify the travel pathway to include multiple visual observer indications, such as in instances where the apparatus 200 generates multiple zones along the travel pathway that are associated with poor signal strength.

The apparatus 200 may modify the travel pathway to include combinations of visual observer indications, augmentation system indications, travel pathway adjustments, onboard sensor indications, and/or the like. For example, the apparatus 200 may generate a plurality of zones that are associated with poor signal strength. The apparatus 200 may determine that i) a viewing entity 107 is only available for a first poor signal strength zone, and ii) one or more augmentation systems 120 are available for the remaining subset of poor signal strength zones. In such a scenario, the apparatus 200 may modify the travel pathway of the corresponding vehicle 109 to include a visual observer indication for the first poor signal strength zone and a respective augmentation system indication for each of the remaining subset of poor signal strength zones.

As another example, the apparatus 200 may determine that i) a viewing entity 107 is only available for a first poor signal strength zone, ii) no augmentation systems 120 are available for the remaining subset of poor signal strength zones, and iii) the travel pathway is unable able to accept travel pathway adjustments for the remaining subset of poor signal strength zones. In such context, the apparatus 200 may generate an onboard sensor indication that indicates a position along the travel pathway at which a transition of the vehicle 109 from the BVLOS mode to an onboard sensor mode is initiated to enable the vehicle 109 to autonomously navigate along the travel pathway using one or more onboard sensors.

In some embodiments, the workflow 600 includes the apparatus 200 causing provision of the modified travel pathway to the zone-remote control system 103 with which the vehicle 109 is associated (indicium 636). In some embodiments, the apparatus 200 provisions the modified travel pathway to one or more additional entities, such as a computing device of the viewing entity 107 associated with the modified travel pathway, one or more transportation agencies, and/or the like. In some embodiments, the apparatus 200 stores the modified travel pathway in travel pathway data 110 at one or more data stores 102. In some embodiments, the apparatus 200 causes rendering of a graphical user interface (GUI) on a display of the zone-remote control system 103. In some embodiments, the GUI includes a mapping of the modified travel pathway, a set of indicia along the mapping that correspond to the plurality of zones, one or more additional indicia based at least in part on the visual observer indication (or other indications, such as an augmentation indication), and/or the like.

In some embodiments, the workflow 600 optionally includes the zone-remote control system 103 (or apparatus 200) monitoring the location of the vehicle 109 (indicium 639). For example, the zone-remote control system 103 may receive a real-time position from the vehicle 109 or generate the real-time position based at least in part on vehicle data 108, travel pathway data 110, position signal data 112, and/or the like associated with the vehicle 109. In some embodiments, the zone-remote control system 103 receives a real-time position of the vehicle 109 from a viewing entity 107. In some embodiments, the workflow 600 optionally includes the zone-remote control system 103 (or apparatus 200) determining that the vehicle 109 has moved within a predetermined proximity of the zone associated with poor position signal (indicium 642). In some embodiments, the workflow 600 optionally includes the zone-remote control system 103 (or apparatus 200) transitioning the vehicle 109 from the BVLOS mode to the visual observer mode in response to the vehicle 109 being located within the predetermined proximity of the zone associated with poor signal strength (indicium 645).

### Example Processes of the Disclosure

Having described example systems and apparatuses, data architectures, data flows, and graphical representations in accordance with the disclosure, example processes of the disclosure will now be discussed. It will be appreciated that each of the flowcharts depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally, or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

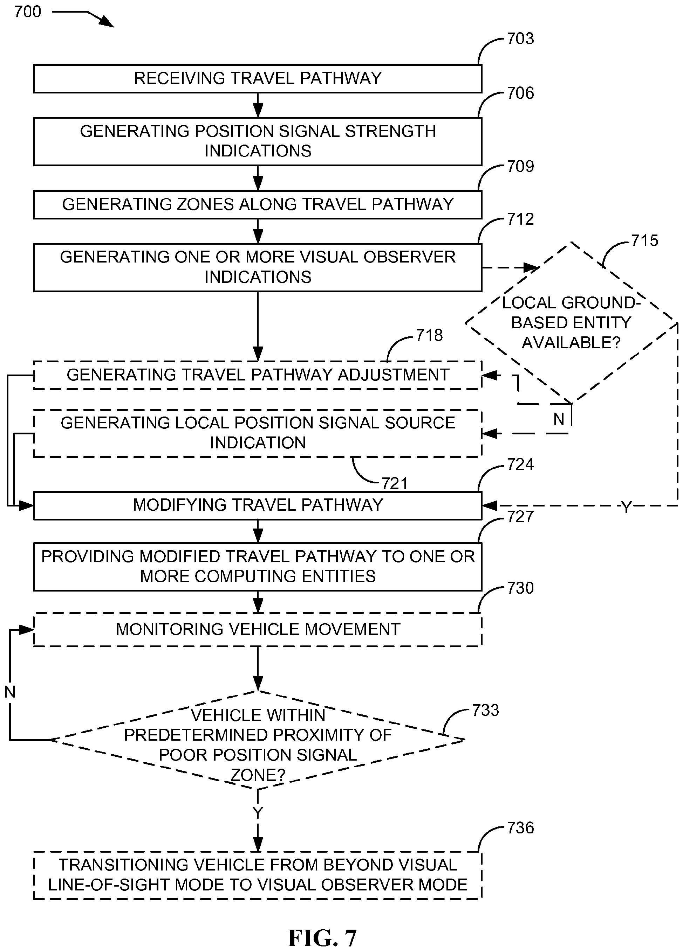

FIG. 7 illustrates a flowchart depicting operations of an example process 700 for controlling vehicle navigation based at least in part on strength of position signals in accordance with at least some example embodiments of the present disclosure. Specifically, FIG. 7 depicts operations of an example process 700. In some embodiments, the process 700 is embodied by computer program code stored on a non-transitory computer-readable storage medium of a computer program product configured for execution to perform the process as depicted and described. Additionally, or alternatively, in some embodiments, the process 700 is performed by one or more specially configured computing devices, such as apparatus 200 alone or in communication with one or more other component(s), device(s), system(s), and/or the like. In this regard, in some such embodiments, the apparatus 200 is specially configured by computer-coded instructions (e.g., computer program instructions) stored thereon, for example in the memory 203 and/or another component depicted and/or described herein and/or otherwise accessible to the apparatus 200, for performing the operations as depicted and described.

In some embodiments, the apparatus 200 is in communication with one or more internal or external apparatus(es), system(s), device(s), and/or the like, to perform one or more of the operations as depicted and described. For example, the apparatus 200 may communicate with a zone-remote control system 103, one or more remote computing environments 105, one or more viewing entities 107, and/or the like to perform one or more operations of the process 700.

At operation 703, the apparatus 200 includes means such as the travel pathway processing circuitry 209, the communications circuitry 205, the input/output circuitry 207, the processor 201, and/or the like, or a combination thereof, that receive a travel pathway. For example, the apparatus 200 may receive a travel pathway from a zone-remote control system 103. In some embodiments, the apparatus 200 performs the process 700 detecting an upload of a travel pathway to a computing environment monitored by the apparatus 200. For example, in an aerial context, the apparatus 200 may receive (or detect an upload including) a UAV flight plan from a control station 116 of a zone-remote control system 103. In some embodiments, the travel pathway includes a planned course of travel for a vehicle 109 between an origin point and a destination point. In some embodiments, a travel pathway includes metadata including identifying information for one or more vehicles associated with the travel pathway, a target or expected travel time, a travel data, one or more weather conditions along the travel pathway, one or more mappings of ground infrastructure and/or topography along or proximate to the travel pathway, and/or the like. In some embodiments, the apparatus 200 obtains data from the data store 102 based at least in part on the travel pathway. For example, the apparatus 200 may retrieve vehicle data 108, historical travel data 317, historical position signal data 321, and/or the like based at least in part on the travel pathway and/or a vehicle 109 identified by the travel pathway.

In some embodiments, the apparatus 200 processes the travel pathway to generate and store data that may be subsequently used as an input for generating travel pathway modifications. For example, based at least in part on the travel pathway, the apparatus 200 may generate a vehicle identifier 301, configuration data 303, performance data 305, and/or the like for an unmanned vehicle associated with the travel pathway. As another example, the travel pathway may indicate one or more geographical areas and the apparatus 200 may communicate with one or more remote computing environments 105 to obtain environmental data 309, topography data 315, and/or the like, associated with the one or more geographical areas.

At operation 706, the apparatus 200 includes means such as the travel pathway processing circuitry 209, the communications circuitry 205, the input/output circuitry 207, the processor 201, and/or the like, or a combination thereof, that generate a plurality of signal strength indications for the travel pathway. For example, the apparatus 200 may generate a plurality of signal strength indications for the travel pathway based at least in part on the travel pathway and satellite-based positioning data. In some embodiments, the apparatus 200 modifies the travel pathway to include the plurality of signal strength indications, which may enable the zone-remote control system 103 to accurately predict availability and reliability of position signal along the travel pathway. In some embodiments, the apparatus 200

In some embodiments, the apparatus 200 receives the satellite-based positioning data from a remote computing environment 105. For example, the apparatus 200 may provision the travel pathway to the remote computing environment 105. In some embodiments, the apparatus 200 causes the remote computing environment 105 to process the travel pathway and generate satellite-based positioning data indicative of signal strengths of satellite-based position signals along the travel pathway. In some embodiments, the satellite-based positioning data includes multiple indications of signal strength for the same location at varying time intervals. In some embodiments, the apparatus 200 generates one or more time intervals based at least in part on the travel pathway, where the time intervals may indicate when the associated vehicle will progress along portions of the travel pathway. In some embodiments, the apparatus 200 provisions the time intervals to the remote computing environment 105 to cause the remote computing environment 105 to generate time-specific predictions of signal strength along the travel pathway. In some embodiments, the apparatus 200 generates or receives a desired departure time, arrival time, travel duration, vehicle speed, and/or the like based at least in part on the travel pathway and/or metadata associated therewith. In some embodiments, the apparatus 200 provisions the desired departure time, arrival time, travel duration, vehicle speed and/or the like to the remote computing environment 105 to cause the remote computing environment 105 to generate estimates of signal strength along the travel pathway further based at least in part on the additional provisioned data.

At operation 709, the apparatus 200 includes means such as the travel pathway processing circuitry 209, the communications circuitry 205, the input/output circuitry 207, the processor 201, and/or the like, or a combination thereof, that generate a plurality of zones along the travel pathway. For example, the apparatus 200 may generate a plurality of zones along the travel pathway based at least in part on the plurality of signal strength indications of operation 706. In some embodiments, the apparatus 200 partitions the travel pathway into a plurality of zones based at least in part on a predefined increment along the travel pathway (e.g., 1 mile, 5 miles, 100 miles, or another suitable value). Alternatively, or additionally, in some embodiments, the apparatus 200 partitions the travel pathway into a plurality of zones based at least in part on identifying portions of along the travel pathway that demonstrate similar signal strengths. For example, the apparatus 200 may demarcate zones along the travel pathway by identifying portions along the travel pathway at which signal strength deviates beyond a predetermined value or range, which may be an absolute value of signal strength as compared to a predetermined threshold, or a relative value of signal strength based at least in part on comparisons between signal strengths of proximate travel pathway portions.

In some embodiments, the plurality of zones includes one or more zones associated with poor signal strength. In some embodiments, the apparatus 200 determines that a signal strength indication for a portion of the travel pathway is below a predefined threshold value and generates a zone of poor signal strength along the travel pathway that corresponds to the portion. For example, the apparatus 200 may generate zones along a flight path based at least in part on indications of GPS signal strength along the flight path. The zones along the flight path may include a plurality of zones that are associated with nominal GPS signal strength and one or more zones that are associated with poor GPS signal strength (e.g., which may include instances where GPS signal is unavailable in the portion of the flight path). In some embodiments, the apparatus 200 generates multiple sets of zones along the travel pathway under various times of day, weather patterns, and/or the like, which may indicate strength of position signals along the travel pathway under varying conditions.

At operation 712, the apparatus 200 includes means such as the travel pathway processing circuitry 209, the communications circuitry 205, the input/output circuitry 207, the processor 201, and/or the like, or a combination thereof, that generate one or more visual observer indications. For example, the apparatus 200 may generate one or more visual observer indications based at least in part on the plurality of zones and plurality of signal strengths of operations 706, 709. In some embodiments, the visual observer indication indicates a position along the travel pathway at which a transition of the vehicle 109 from a beyond visual line of sight (BVLOS) mode to a visual observer mode is initiated. In some embodiments, the visual observer indication includes a time interval for initiating the transition of the vehicle 109 from the BVLOS mode to the visual observer mode. In some embodiments, the apparatus 200 generates the time interval based at least in part on performance data 305 of the vehicle 109, a course of travel indicated by the travel pathway, a departure time, and/or the like. For example, based at least in part on a vehicle speed, course of travel, and departure time, the apparatus 200 may generate a time interval at which the vehicle 109 is predicted to approach within a predetermined proximity of the zone associated with poor signal strength.

**In** some embodiments, the apparatus 200 generates the visual observer indication based at least in part on a real-time monitored position of the vehicle 109 along the travel pathway. For example, while the vehicle 109 is traveling along the travel pathway, the apparatus 200 may receive from the remote computing environment 105 an indication of poor signal strength or position signal unavailability along a subsequent portion of the travel pathway. The apparatus 200 may generate a zone that corresponds to the portion of the travel pathway and a position that defines a predefined proximity to the zone. The apparatus 200 may obtain the current location and speed of the vehicle 109 along the travel pathway from the zone-remote control system 103 in control of the vehicle 109. The apparatus 200 may generate, based at least in part on the current location and speed, a time interval indicative of when the vehicle 109 is predicted to arrive at the position. The apparatus 200 may generate, based at least in part on the position and time interval, a visual observer indication that indicates a time and location at which a viewing entity 107 may temporarily exercise backup control of the vehicle 109 to safely navigate the vehicle 109 through the zone associated with poor or unavailable position signal.

In some embodiments, the apparatus 200 generates a visual observer indication that indicates a viewing entity 107 is unavailable for the zone associated with poor signal strength. In some embodiments, the visual observer indication indicates an unavailable period for the viewing entity 107, which may enable adjustment of the travel pathway (e.g., travel date, departure time, vehicle speed, and/or the like) such that the vehicle 109 moves within a predetermined proximity of the zone at a time interval outside of the unavailable period for the viewing entity 107. In some embodiments, the visual observer indication indicates a position along the travel pathway at which a transition of the vehicle 109 from the visual observer mode to the BVLOS mode may be initiated to disable the backup control of the vehicle 109 by the viewing entity 107. For example, the visual observer indication may cause the apparatus 200 (or zone-remote control system 103) to transition the vehicle 109 to the BVLOS mode and disable the backup control of the viewing entity 107 in response to the vehicle 109 moving beyond a predetermined proximity of the zone associated with poor signal strength.

At operation 715, the apparatus 200 optionally includes means such as the travel pathway processing circuitry 209, the communications circuitry 205, the input/output circuitry 207, the processor 201, and/or the like, or a combination thereof, that determine whether a viewing entity 107 is available to exercise temporary backup control of the vehicle 109 while the vehicle 109 is within a predetermined proximity of the zone associated with poor signal strength. In some embodiments, in response to determining the viewing entity 107 is available, the apparatus 200 generates a visual observer indication and proceeds to operation 721, where the visual observer indication indicates the availability of and identifies the viewing entity 107. For example, the visual observer indication may include communication data 329 by which a connection may be established between the viewing entity 107 and the vehicle 109 to grant backup control and outputting of vehicle data to the viewing entity 107. In some embodiments, in response to determining that no viewing entity is available, the apparatus 200 optionally generates a visual observer indication that indicates unavailability of viewing entities for the zone associated with poor signal strength. In some embodiments, in response to determining that non viewing entity is available, the process 700 proceeds to operation 718 and/or operation 721.

In some embodiments, to determine viewing entity availability, the apparatus 200 determines whether a viewing entity 107 is located proximate to a zone associated with poor signal strength. For example, the apparatus 200 may determine whether a viewing entity 107 is located within a predetermined proximity of the zone based at least in part on viewing entity data 114 including location data 326. In some embodiments, the apparatus 200 determines availability of the viewing entity 107 further based at least in part on availability data of the viewing entity 107. For example, based at least in part on a schedule, workload, travel date, departure time, and/or the like indicated by the travel pathway, the apparatus 200 may determine whether a viewing entity 107 is available to exercise temporary backup control of the vehicle 109 while the vehicle 109 is within a predetermined proximity of the zone associated with poor signal strength.

In some embodiments, the apparatus 200 generates and causes provision of a visual observation request to the viewing entity 107. In some embodiments, the visual observation request includes or indicates the travel pathway, the zone associated with poor signal strength, the position and/or time interval at which a transition of the vehicle 109 to the visual observer mode may be initiated, and/or the like. In some embodiments, the apparatus 200 receives, in response to the visual observation request, an acceptance or a rejection of the visual observation request from the viewing entity 107. In some embodiments, the apparatus 200 receives availability data from the viewing entity 107. In some embodiments, the apparatus 200 determines availability of the viewing entity 107 based at least in part on the availability data. In some embodiments, the apparatus 200 generates an unavailable period for the viewing entity 107 based at least in part on the availability data.

At operation 718, the apparatus 200 includes means such as the travel pathway processing circuitry 209, the communications circuitry 205, the input/output circuitry 207, the processor 201, and/or the like, or a combination thereof, that generate a travel pathway adjustment. For example, the apparatus 200 may generate a travel pathway adjustment based at least in part on the availability of the viewing entity 107, the plurality of signal strength indications, the plurality of zones, and/or the like. In some embodiments, the apparatus 200 generates a travel pathway adjustment that revises a travel date, departure time, vehicle speed, course of travel, and/or the like, such that movement of the vehicle 109 through the zone associated with poor signal strength occurs outside of an unavailable period for the viewing entity 107. In some embodiments, in response to determining that no viewing entity 107 is available for the zone associated with poor signal strength, the apparatus 200 generates a travel pathway adjustment that directs movement of the vehicle 109 to circumvent the zone associated with poor signal strength while traveling along the travel pathway. In some embodiments, the apparatus 200 generates a travel pathway adjustment that modifies a travel time, departure time, vehicle speed, and/or the like of the vehicle 109 such that the vehicle 109 travels through the zone during a time interval in which the zone experiences peak signal strength.

In some embodiments, the apparatus 200 generates a travel adjustment comprising an onboard sensor indication. In some embodiments, the onboard sensor indication indicates a position along the travel pathway at which a transition of the vehicle 109 from the BVLOS mode to an onboard sensor mode is initiated to enable vehicle 109 to autonomously navigate along the travel pathway using one or more sensors 111. For example, the apparatus 200 may generate the onboard sensor indication in response to determining that no viewing entity 107 is available to exercise backup control of the vehicle 109 within the zone associated with poor signal strength and that the travel pathway cannot accept modifications to circumvent the zone.

At operation 721, the apparatus 200 optionally includes means such as the travel pathway processing circuitry 209, the communications circuitry 205, the input/output circuitry 207, the processor 201, and/or the like, or a combination thereof, that generate an augmentation system indication. For example, the apparatus 200 may generate an augmentation system indication that indicates a position along the travel pathway at which a connection between the vehicle 109 and an augmentation system 120 is established to enable outputting of positioning data from the augmentation system 120 to the vehicle 109. In some embodiments, the apparatus 200 determines whether an augmentation system 120 is proximate to the zone associated with poor signal strength and/or within a communication range of the vehicle 109 when the vehicle 109 is within a predetermined proximity of the zone.

At operation 724, the apparatus 200 includes means such as the travel pathway processing circuitry 209, the communications circuitry 205, the input/output circuitry 207, the processor 201, and/or the like, or a combination thereof, that modify the travel pathway based at least in part on one or more visual observer indications, one or more augmentation system indications, one or more onboard sensors indications, one or more travel pathway adjustments, and/or the like. For example, the apparatus 200 may modify the travel pathway modify the travel pathway based at least in part on one or more visual observer indications, one or more augmentation system indications, one or more onboard sensors indications, one or more travel pathway adjustments, and/or the like. In one example, in an aerial context, the apparatus 200 modifies a flight path to include a visual observer indication indicative of a position along the flight path at which an unmanned aerial vehicle (UAV) may be transitioned from a BVLOS mode to a visual observer mode to enable a viewing entity 107 to remotely pilot the UAV through a zone associated with poor signal strength. In some embodiments, the apparatus 200 generates an estimated travel time based at least in part on the modified travel pathway. For example, the apparatus 200 may generate an estimated travel time based at least in part on one or more visual observer indications, travel pathway adjustments, augmentation system indications, onboard sensor indications, and/or the like. In some embodiments, the apparatus 200 further modifies the travel pathway to include the estimated travel time.

At operation 727, the apparatus 200 includes means such as the travel pathway processing circuitry 209, the communications circuitry 205, the input/output circuitry 207, the processor 201, and/or the like, or a combination thereof, that provide the modified travel pathway to one or more computing entities, such as the zone-remote control system 103. For example, the apparatus 200 may provide the modified travel pathway to the zone-remote control system 103 from which the original travel pathway was received at operation 703. In some embodiments, the apparatus 200 provides the modified travel pathway to the viewing entity 107 associated with the visual observer indication. In some embodiments, the apparatus 200 stores the modified travel pathway in travel pathway data 110 at the data store 102, which may be further associated with a vehicle identifier 301 for the vehicle 109. In some embodiments, the apparatus 200 provides to the zone-remote control system 103 and/or viewing entity 107 an estimated travel time for the vehicle 109 based at least in part on the modified travel pathway. In some embodiments, the apparatus 200 causes rendering of a graphical user interface (GUI) on one or more displays of a control station 116 and/or computing device of a viewing entity 107. In some embodiments the GUI includes a mapping of the modified travel pathway, a set of indicia based at least in part on the plurality of zones, and one or more additional indicia based at least in part on the one or more visual observer indications.

At operation 730, the apparatus 200 includes means such as the travel pathway processing circuitry 209, the communications circuitry 205, the input/output circuitry 207, the processor 201, and/or the like, or a combination thereof, that monitor movement of the vehicle 109. For example, the apparatus 200 may monitor movement of the vehicle 109. In some embodiments, the apparatus 200 receives a real-time location of the vehicle 109 from the vehicle 109, the zone-remote control system 103, a remote computing environment 105, or a viewing entity 107. Additionally, or alternatively, the zone-remote control system 103 and/or viewing entity 107 may monitor movement of the vehicle 109.

At operation 733, the apparatus 200 optionally includes means such as the travel pathway processing circuitry 209, the communications circuitry 205, the input/output circuitry 207, the processor 201, and/or the like, or a combination thereof, that determine whether the vehicle 109 is located within a predetermined proximity of the zone associated with poor signal strength based at least in part on the monitored movement of the vehicle 109. For example, the apparatus 200 (or zone-remote control system 103) may determine whether the vehicle 109 is approaching within a predetermined proximity of the zone associated with poor signal strength.

At operation 736, the apparatus 200 optionally includes means such as the travel pathway processing circuitry 209, the communications circuitry 205, the input/output circuitry 207, the processor 201, and/or the like, or a combination thereof, that initiate a transition of the vehicle 109 from the BVLOS mode to the visual observer mode. For example, the apparatus 200 may initiate a transition of the vehicle 109 from the BVLOS mode to the visual observer mode. Alternatively, in some embodiments, the modified travel pathway causes the zone-remote control system 103 to automatically transition the vehicle 109 from the BVLOS mode to the visual observer mode. Alternatively, in some embodiments, the modified travel pathway causes the zone-remote control system 103 to direct movement of the vehicle 109 to circumvent the zone associated with poor signal strength.

In some embodiments, in instances where a viewing entity 107 is unavailable, the process 700 includes the apparatus 200 (or zone-remote control system 103) initiating a transition of the vehicle 109 to an onboard sensor mode to enable the vehicle 109 to autonomously navigate through the zone associated with poor signal strength using one or more sensors 111 (e.g., cameras, distance sensors, and/or the like). Alternatively, or additionally, in some embodiments, the apparatus 200 (or zone-remote control system 103) causes the vehicle 109 to establish communication with an augmentation system 120 to enable outputting of supplemental positioning data to the vehicle 109. The positioning data from the augmentation system 120 may enable the vehicle 109 to maintain precise and accurate navigation through the zone associated with poor signal strength and/or signal unavailability. Alternatively, in some embodiments, the modified travel pathway causes the zone-remote control system 103 to navigate the vehicle 109 along an adjusted course of travel that circumvents the zone.

### Conclusion

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially-generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random-access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

In some embodiments, some of the operations above may be modified or further amplified. Furthermore, in some embodiments, additional optional operations may be included. Modifications, amplifications, or additions to the operations above may be performed in any order and in any combination.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A computer-implemented method, comprising:
receiving a travel pathway for a vehicle;
generating a plurality of signal strength indications for the travel pathway based at least in part on the travel pathway and satellite-based positioning data obtained from a remote computing environment;
generating, based at least in part on the plurality of signal strength indications for the travel pathway, a plurality of zones along the travel pathway, wherein the plurality of zones comprises at least one zone associated with poor signal strength;
generating, based at least in part on the plurality of signal strength indications and the plurality of zones, one or more visual observer indications that indicate a position along the travel pathway at which a transition of the vehicle from a beyond visual line-of-sight (BVLOS) mode to a visual observer mode is initiated, wherein the visual observer mode enables backup control of the vehicle by a viewing entity while the vehicle is within a predetermined proximity of the at least one zone associated with poor signal strength;
modifying the travel pathway based at least in part on the one or more visual observer indications; and
providing the modified travel pathway to at least one zone-remote control system configured to control the vehicle.

2. The method of claim 1, further comprising:
generating the one or more visual observer indications further based at least in part on a real-time monitored position of the vehicle along the travel pathway.

3. The method of claim 1, further comprising:
causing rendering of a graphical user interface (GUI) at a computing device of the at least one zone-remote control system, wherein the GUI comprises:
a mapping of the travel pathway, a set of indicia based at least in part on the plurality of zones rendered along the travel pathway, and one or more additional indicia based at least in part on the one or more visual observer indications.

4. The method of claim 1, further comprising:
in response to determining the vehicle is located within the predetermined proximity of the at least one zone associated with poor signal strength, transitioning the vehicle from the BVLOS mode to the visual observer mode to enable the backup control of the vehicle by the viewing entity.

5. The method of claim 4, further comprising:
establishing a connection between the at least one zone-remote control system and the vehicle to enable control and monitoring of the vehicle by the at least one zone-remote control system, wherein:
transitioning the vehicle from the BVLOS mode to the visual observer mode comprises establishing a connection between a computing device of the viewing entity to enable the backup control of the vehicle by the viewing entity.

6. The method of claim 5, wherein:
while the vehicle is in the visual observer mode, the connection between at least one zone-remote control system and the vehicle is maintained to continue outputting of vehicle data via the at least one zone-remote control system and granting an override of control of the vehicle to the at least one zone-remote control system.

7. The method of claim 4, further comprising:
in response to determining the vehicle has moved beyond the predetermined proximity of the at least one zone associated with poor signal strength, automatically transitioning the vehicle from the visual observer mode to the BVLOS mode, wherein the transitioning of the vehicle to the BVLOS mode disables the backup control of the vehicle by the viewing entity.

8. The method of claim 1, further comprising:
in response to determining that no viewing entity is available to exercise the backup control of the vehicle while the vehicle is within the predetermined proximity of the at least one zone associated with the poor signal strength:
generating an onboard sensor indication, wherein:
the onboard sensor indication indicates a position along the travel pathway at which a transition of the vehicle from the BVLOS mode to an onboard sensor mode is initiated, wherein, in the onboard sensor mode, the vehicle navigates along the travel pathway using one or more onboard sensors; and
the one or more visual observer indications indicate a lack of availability of viewing entities for the at least one zone associated with poor signal strength; and
modifying the travel pathway further based at least in part on the onboard sensor indication.

9. The method of claim 1, further comprising:
in response to determining that no viewing entity is available to exercise the backup control of the vehicle while the vehicle is within the predetermined proximity of the at least one zone associated with poor signal strength:
generating an augmentation system indication, wherein:
the augmentation system indication indicates a position along the travel pathway at which a connection between the vehicle and an augmentation system is established; and
the augmentation system is located within the predetermined proximity of the at least one zone associated with poor signal strength and provides positioning data to the vehicle via the connection; and
modifying the travel pathway further based at least in part on the augmentation system indication.

10. An apparatus comprising at least one processor and at least one non-transitory memory having computer-coded instructions stored thereon that, in execution with at least one processor, cause the apparatus to:
receive a travel pathway for a vehicle;
generate a plurality of signal strength indications for the travel pathway based at least in part on the travel pathway and satellite-based positioning data obtained from a remote computing environment;
generate, based at least in part on the plurality of signal strength indications for the travel pathway, a plurality of zones along the travel pathway, wherein the plurality of zones comprises at least one zone associated with poor signal strength;
generate, based at least in part on the plurality of signal strength indications and the plurality of zones, one or more visual observer indications that indicate a position along the travel pathway at which a transition of the vehicle from a beyond visual line-of-sight (BVLOS) mode to a visual observer mode is initiated, wherein the visual observer mode enables backup control of the vehicle by a viewing entity while the vehicle is within a predetermined proximity of the at least one zone associated with poor signal strength;
modify the travel pathway based at least in part on the one or more visual observer indications; and
provide the modified travel pathway to at least one zone-remote control system configured to control the vehicle.

11. The apparatus of claim 10, wherein the computer-coded instructions, in execution with the at least one processor, further cause the apparatus to:
cause provision of a visual observation request to the viewing entity;
receive a response to the visual observation request comprising availability data associated with the viewing entity;
determine an availability of the viewing entity based at least in part on the availability data; and
generate the one or more visual observer indications further based at least in part on the availability of the viewing entity.

12. The apparatus of claim 11, wherein the computer-coded instructions, in execution with the at least one processor, further cause the apparatus to:
generate a travel pathway adjustment based at least in part on the availability of the viewing entity; and
modify the travel pathway further based at least in part on the travel pathway adjustment.

13. The apparatus of claim 10, wherein:
the computer-coded instructions, in execution with the at least one processor, further cause the apparatus to:
determine an unavailable period of the viewing entity; and
modify the travel pathway to direct movement of the vehicle through the at least one zone associated with poor signal strength during a time interval outside of the unavailable period.

14. The apparatus of claim 10, wherein:
the computer-coded instructions, in execution with the at least one processor, further cause the apparatus to:
generate a travel pathway adjustment in response to determining that no viewing entity is available to exercise the backup control of the vehicle while the vehicle is within the predetermined proximity of the at least one zone associated with poor signal strength; and
modify the travel pathway based at least in part on the travel pathway adjustment, wherein the travel pathway adjustment directs movement of the vehicle to circumvent the at least one zone associated with poor signal strength while traveling along the travel pathway.

15. A computer program product comprising at least one non-transitory computer-readable storage medium having computer program code stored thereon that, in execution with at least one processor, is configured to:
receive a travel pathway for a vehicle;
generate a plurality of signal strength indications for the travel pathway based at least in part on the travel pathway and satellite-based positioning data obtained from a remote computing environment;
generate, based at least in part on the plurality of signal strength indications for the travel pathway, a plurality of zones along the travel pathway, wherein the plurality of zones comprises at least one zone associated with poor signal strength;
generate, based at least in part on the plurality of signal strength indications and the plurality of zones, one or more visual observer indications that indicate a position along the travel pathway at which a transition of the vehicle from a beyond visual line-of-sight (BVLOS) mode to a visual observer mode is initiated, wherein the visual observer mode enables backup control of the vehicle by a viewing entity while the vehicle is within a predetermined proximity of the at least one zone associated with poor signal strength;
modify the travel pathway based at least in part on the one or more visual observer indications; and
provide the modified travel pathway to at least one zone-remote control system configured to control the vehicle.
